# EUROPEAN PATENT SPECIFICATION

(11) **EP 4 272 566 B1**
(45) Date of publication and mention of the grant of the patent: **09.07.2025**
(21) Application number: 22172194.7
(22) Date of filing: 06.05.2022
(51) Int. Cl.: A22C 11/02

(54) **FILLING TUBE ASSEMBLY OF A CLIPPING MACHINE, SYSTEM AND METHOD FOR PRODUCING SAUSAGE-SHAPED PRODUCTS**
FÜLLROHRANORDNUNG EINER CLIPMASCHINE, VORRICHTUNG UND VERFAHREN ZUR HERSTELLUNG WURSTFÖRMIGER PRODUKTE
ENSEMBLE TUBE DE REMPLISSAGE D'UNE MACHINE D'AGRAFAGE, SYSTÈME ET PROCÉDÉ DE FABRICATION DE PRODUITS EN FORME DE SAUCISSE

(43) Date of publication of application: 08.11.2023
(73) Proprietor: Poly-clip System GmbH & Co. KG, 65795 Hattersheim (DE)
(72) Inventor: Meyrahn, Joachim, 64390 Erzhausen (DE); Münker, Udo, 63505 Langenselbold (DE); Schmidt, Thomas, 63594 Hasselroth (DE)
(74) Representative: Eisenführ Speiser

(56) References cited:
- EP-A1- 2 735 514
- DE-A1- 3 106 074
- US-A- 4 306 334
- US-A- 4 991 260
- US-A1- 2014 127 985
- US-A1- 2019 059 400

## Description

The present invention relates to a filling tube assembly of a clipping machine for producing sausage-shaped products, like sausages, by filling a filling material into a tubular packaging casing and a system for producing sausage-shaped products, like sausages, by filling a filling material into a tubular packaging casing, the system includes a clipping machine for producing sausage-shaped products and a robotic device. Moreover, the present invention relates to a method for producing sausage-shaped products in the inventive systems.

In practice, packaging machines, like clipping machines, are known, for producing sausage-shaped products, like sausages, in which filling material is fed into a tubular or bag-shaped packaging casing which is stored on a filling tube, and which is closed at its front end by a closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and at least a first closure clip is placed and closed on said plait-like portion by a clipping device, for closing the portion of the tubular or bag-shaped packaging casing just filled. Additionally, a second closure clip may be placed for closing the front end of the sausage-shaped product to be produced next. For severing the sausage-shaped product just produced from the remaining supply a tubular or bag-shaped packaging casing, a cutting device may be provided for cutting off the plait-like portion between the first and second closure clip. If it is intended to store sausage-shaped products on a rod-like element, like a smoking rod, e.g. for further treatment like cooking or smoking, a suspension element, like a suspension loop, may be provided and attached to one end of each of sausage-shaped products, or at one end of a chain of sausage-shaped products. The suspension element is fed to the clipping device and fixed to the respective end of the sausage-shaped product by the closure clip that closes the respective end of the sausage-shaped product. The sausage-shaped product is then discharged from the clipping machine by a discharge device, like a belt conveyor, and fed to a hanging line, where a predefined number of sausage-shaped products is suspended by their suspension elements onto a rod-like element. The rod-like element loaded with sausage-shaped products is fed out of the hanging line and placed for further treatment e.g. in a storage frame.

From US patent 4 306 334 A, a process and an apparatus for treating a sausage casing prior to filling is known. The apparatus comprises watering means with a star-shaped holder for holding artificial casings to be watered, and a filling machine having a turret. The turret is rotatable about an axis and carries two filling tubes one of which is aligned coaxially with the holder, so that a watered casing can be transferred to this filling tube. Two casing brakes are pivotably connected to the turret.

US patent 4,991,260 A discloses a stuffing method and a stuffing apparatus for producing sausages. A filling machine comprises a manifold on which a turret is arranged to rotate about an axis. The turret head has three stuffing horns, which can be pivoted together about the axis of the turret by a motor. Shirred casings are arranged on two stuffing horns, so that these casings can be filled and closed by a closing device. A chute is arranged in front of the third stuffing horn, by means of which a shirred casing can be transferred onto said stuffing horn.

In these known clipping machines, tubular or packaging casing, which may be provided as a supply in the form of a hollow stick of folded tubular casing material, is manually shifted onto the filling tube, by an operator. Usually, the operator pivots the filling tube out of its filling position, shifts a tubular packaging casing supply onto the filling tube, and pivots the filling tube back into its filling position. Alternatively, a tubular packaging casing supply may automatically be shifted onto the filling tube. In this case, the tubular packaging casing supply is transferred by gravity or by a shifting element onto the filling tube held in a specific refill position. Refilling a tubular packaging casing supply onto a filling tube of a clipping machine by hand is time consumable and requires the presence of an operator for each refill event. Furthermore, for automatically refilling of a tubular packaging casing supply, whereby the tubular packaging casing supply is transferred by gravity or by a shifting element onto the filling tube, requires a specific storage. Furthermore, said storage device has to be positioned relative to the filling tube in a specific position, to which the filling tube has exactly to be aligned. Moreover, a huge control amount is necessary for coordinating the operations of the components of such an arrangement. Otherwise, the tubular packaging casing supply may be damaged while being shifted onto the filling tube, which leads to production losses and increasing downtimes.

Thus, it is an object of the present invention, to overcome the above mentioned drawbacks, and to provide a filling tube assembly, a system and a method for producing sausage-shaped products, which enable efficient production of sausage-shaped products, in which unnecessary downtimes are omitted.

The objective is achieved by a filling tube assembly as defined in independent claim 1 as well as a system for producing sausage-shaped products pursuant to claim 9. In addition, a method for producing sausage-shaped products is defined in claim 15. Further developments of the present invention are defined in the dependent claims.

According to a first aspect of the present invention, there is provided a filling tube assembly of a clipping machine for producing sausage-shaped products, like sausages, by filling a filling material into a tubular packaging casing, the filling tube assembly comprising: a revolver plate, which is rotatable about a rotation axis, at least a first filling tube and a second filling tube each having a central axis, wherein the filling tubes are mounted on the revolver plate, at least a first casing brake assembly and a second casing brake assembly, wherein the first casing brake assembly is connected to the first filling tube and the second casing brake assembly is connected to the second filling tube, and a drive device for rotating the revolver plate including the filling tubes about the rotation axis, wherein the central axis of the first filling tube and the central axis of the second filling tube define an angle larger than 0°, preferably between 15° and 75°, and more preferably between 30° and 60°. Furthermore, the first casing brake assembly is associated with the first filling tube and includes a first casing brake unit positioned in the region of a first end of the first filling tube, and is pivotally coupled to the revolver plate by a first telescopic casing brake holder unit, and the second casing brake assembly is associated with the second filling tube and includes a second casing brake unit positioned in the region of a first end of the second filling tube, and is pivotally coupled to the revolver plate by a second telescopic casing brake holder unit. Moreover, the first casing brake unit is linearly reversibly shiftable along the first filling tube onto its first end and pivoted away from the first end of the first filling tube, and the second casing brake unit is linearly reversibly shiftable along the second filling tube onto its first end and pivoted away from the first end of the second filling tube.

According to this configuration it is possible to provide a filling tube assembly which is capable to overcome the aforesaid drawbacks of the state of art. Further, the filling tube assembly may be used for a fully automated production line. A first filling tube is used to fill a tubular casing, while the second filling tube is equipped with an unfilled tubular casing, e.g. by a robotic device.

In some embodiments, the first casing brake holder unit includes a telescopic guidance and a telescopic drive for extending and retracting telescopic guidance, and wherein the second casing brake holder unit includes a telescopic guidance and a telescopic drive for extending and retracting telescopic guidance.

In some embodiments, the telescopic drives are linear drives, particularly, piston/cylinder drives.

In some embodiments, the filling tube assembly further comprises a first pivot drive unit, which is provided for pivoting the first casing brake assembly relative to the first filling tube about a pivot point at which the first casing brake assembly is coupled to the revolver plate, and wherein the filling tube assembly further comprises a second pivot drive unit, which is provided for pivoting the second casing brake assembly relative to the second filling tube about a pivot point at which the second casing brake assembly is coupled to the revolver plate.

In some embodiments, the filling tube assembly is mounted on a framework via a joint portion. Further, the joint portion may be mounted on a side wall of the framework.

In some embodiments, the filling tube assembly is linearly and/or rotatably shiftable such that the filling tube is positioned in front of the clipping machine. According to this, it is possible to operate the clipping machine with the first filling tube and at the same time providing the second filling tube with a tubular casing material.

In some embodiments, a feeding socket is fixed to the revolver plate and facing away from the clipping machine, wherein feeding socket is coaxially aligned with the central axis of the filling tube.

Preferably, each filling tube comprises a safety pin on its second end, which extends in a direction away from longitudinal axis of the respective filling tube. In some embodiments, in a position in which a robot puts a tubular packaging casing on the respective filling tube, the safety pin is captured in a stopper element, wherein the stopper element preferably has a C- or L-shape. Due to this, respective filling tube is fixed in a predetermined position.

According to a second aspect of the present invention there is provided a system for producing sausage-shaped products, like sausages, by filling a filling material into a tubular packaging casing, the system includes a clipping machine for producing sausage-shaped products, a robotic device for transferring a tubular packaging casing supply to the clipping machine, and a storage device for storing a tubular packaging casing supply and for providing the tubular packaging casing supply to the robotic device, the clipping machine comprises: a filling tube assembly according to the present invention, gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, a discharge device for discharging the sausage-shaped product just produced out of the clipping machine, and a control unit for controlling at least the clipping machine and the robotic device.

The inventive system thereby enables the production of sausage-shaped products without unnecessary downtimes, particularly caused by the process of refilling tubular packaging casing supply onto the filling tube. Furthermore, the inventive system enables a safe and reliable transfer of a tubular packaging casing supply from a storage device onto the filling tube of a clipping machine. The robotic device may be programmed on the basis of the current positions of the storage device and the first filling tube in the refill position. The moving path of the robotic device between a take-up position, in which the tubular packaging casing supply is took up by the robotic device from the storage device, and a release position, in which the tubular packaging casing supply is released onto the filling tube, may be selected according to desired parameters, like the shortest or fastest moving path, and/or dependent on the periphery. Thus, a complex design or cumbersome alignment of the storage device and the clipping machine may be omitted.

In some embodiments, the robotic device includes: a gripper unit for gripping a tubular packaging casing supply provided by the storage device, and for transferring said tubular packaging casing supply onto the at least first filling tube of the clipping machine; and a control unit for controlling at least the gripper unit. According to this, it is possible to enhance production times. The use of a gripper unit allows the tubular packaging casing supply to be provided in various positions, like horizontal or vertical, and thus, no specific storage device is needed.

Furthermore, the storage device may be designed independently from the kind of filling tube and its orientation in the refill position.

In some embodiments, the storage device includes: at least a first storage assembly in which at least one tubular packaging casing supply is provided for being transferred by the robotic device onto the at least first filling tube of the clipping machine.

In some embodiments, the first filling tube is movable between a filling position, in which filling material is fed through the first filling tube into the tubular packaging casing stored on the first filling tube, and a refill position, in which a tubular packaging casing supply is transferred onto the first filling tube.

Defining a refill position for the first filling tube allows an optimized operation of the robotic device, e.g. with regard to its movement path and/or the operation time.

For refilling tubular packaging casing supply onto the filling tube of a clipping machine, it is sufficient that the clipping machine includes only one filling tube. However, in order to shorten the downtime for refilling tubular packaging casing supply onto the filling tube, it is preferred that the filling tube assembly of the clipping machine includes a second filling tube and a second casing brake assembly associated with the second filling tube, with the first filling tube being arranged in the filling position, while the second filling tube being arranged in the refill position. Further, more than two filling tubes and casing brake assemblies may also be advantageous.

In this configuration, sausage-shaped products may be produced using the first filling tube, whereas at the same time, tubular packaging casing supply may be transferred onto the second filling tube. Accordingly, the downtime in the production of sausage-shaped products may further be shortened.

Preferably, the filling tube assembly is clamped on the revolver plate by a clamp, which may have a C-shaped form. The C-shaped clamp may have a tightening screw for the additional application of pressure to the filling tube assembly and the revolver plate for holding together the same. Additionally, the filling tube assembly is mounted on the revolver plate via a central screw which is screwed through the filling tube assembly into the revolver plate. By doing this, the filling tube assembly is securely mounted on the revolver plate. Further, the filling tube assembly and the revolver plate are easy to clean, as the filling tube assembly may be rotated in a cleaning position in which the filling tube assembly can be removed easily.

According to a third aspect of the present invention there is provided a method for producing sausage-shaped products in a system according to the present invention, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least first filling tube, and transferring by the robotic device a tubular packaging casing supply provided by a storage device onto the at least first filling tube being arranged in the refill position.

The inventive method thereby provides all advantages explained in conjunction with the inventive system for producing sausage-shaped products.

In the present application, there is further disclosed a gripping device for picking up, conveying and delivering a casing tube such as a casing tube of a sausage, the gripping device comprising: a longitudinal base structure which is attached to a handling device by means of a coupling element, preferably in a non-destructively detachable manner, at least two gripper members having each at least one bottom surface and at least one top surface, wherein the gripper members of the gripping device are provided with gripping surfaces, at least two drive means, which are attached to the axial ends of the base structure, for reversibly moving the gripper members between a first position in which the gripper members are positioned on opposite sides of the casing tube to be picked up, and a second position in which the gripper members seize the casing tube to be picked up, and a control unit for simultaneously driving the drive means of the gripper members.

Preferably, the drive means are driven pneumatically, and wherein the drive means are supplied by means of a compressed air supply via a common valve and respective conduits.

Preferably, the conduits from the common valve to the respective drive means are substantially of the same length.

Preferably, a respective flow restrictor is connected to the drive means for compensating unsynchronized movements during opening and closing of the gripper members by the drive means.

Preferably, at least one of the gripper members is translatory and/or rotatory movable with respect to the base structure.

Preferably, each of the gripper members is guided by at least two guide rods.

Preferably, at least one of the gripper members comprises a detection means which is capable of detecting the contact of the casing tube, wherein preferably two opposing gripper members comprise each a detection means.

Preferably, the drive means are connected to the gripper members via at least one connecting bracket having preferably a curved shape.

Preferably, the base structure and/or the at least two gripper members comprise a plurality of through holes and oblong holes for reducing the weight of the gripping device.

In the present application, there is further disclosed a system for picking up, conveying and delivering a casing tube such as a casing tube of a sausage, the system comprising: a delivering bar on which the respective casing tube is stored, a receiving bar on which the respective casing tube is to be inserted, and a transporting apparatus including a handling device and a gripping device as mentioned above for conveying the casing tube from the delivering bar on the receiving bar.

Preferably, the system further comprises at least one magazine including a plurality of delivering bars, wherein the at least one magazine is mounted on a framework, wherein preferably two magazines are arranged on the framework opposite to each other.

Preferably, the framework is rotatable and configured to rotate the at least one magazine in a picking up position and a loading position, respectively.

Preferably, the at least one magazine comprises a plurality of substantially vertical delivering bars, wherein preferably the delivering bars are arranged in a circle with a predefined distance to each other.

Preferably, the at least one magazine is rotatable and configured to rotate one of the delivering bars in the picking up position.

Preferably, the gripping device of the transporting apparatus is configured to pick up a casing tube from the delivering bar and to deliver said casing tube on the receiving bar which is a filling tube of a clipping machine.

Preferably, the transporting apparatus is attached to the clipping machine, preferably on a back plate of the clipping machine or on a top plate of the clipping machine.

In the present application, there is further disclosed a magazine for providing at least one tubular-shaped packaging casing suitable for receiving a flowable filling material in the production of sausage-shaped products, in particular sausages, comprising: at least one mandrel for holding at least one packaging casing, wherein the at least one mandrel has a longitudinal mandrel axis, and wherein the at least one mandrel comprises a free end at a first mandrel end, and a conveyor for holding at least one mandrel in an upright position, wherein the conveyor conveys the at least one mandrel from a loading position to a delivery position.

Preferably, at least one retaining element is provided wherein the retaining element is arranged at least at the proximity of the first mandrel end for releasably retaining the packaging casing on the at least one mandrel.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the longitudinal mandrel axis is oriented at least approximately vertically or forms an acute angle with the vertical line.

Preferably, the conveyor is a circulating conveyor belt driven by a motor, wherein the conveyor belt is preferably arranged in an oval configuration.

Preferably, the at least one mandrel has a second mandrel end spaced apart from the first mandrel end along the longitudinal mandrel axis and is attached to a respective mandrel carrier means positioned on the conveyer.

Preferably, the at least one mandrel comprises at least one support element for supporting the packaging casing, the at least one support element is preferably reversibly adjustable in its position along the mandrel.

Preferably, the conveyor is inclined in its longitudinal axis.

Preferably, the at least one retaining element is held by holding means coupled by a shaft to the mandrel carrier means for supporting the holding means and transmitting forces from the mandrel carrier means to the holding means.

Preferably, the carrier means are holding the mandrel, the shaft and the holding means.

In the present application, there is further disclosed a production system, in particular a clipping machine, for filling and closing a tubular or bag-shaped packaging casing to produce sausage-shaped products, in particular sausages, comprising: at least one magazine as mentioned above, and a robot to pick-up a packaging casing provided at the magazine and to place it at a filling unit.

Preferably, the loading position and the delivery position of the conveyor is separated by a separating wall, wherein the separating wall includes at least one window for passing the conveyor including the at least one mandrel.

Preferably, the separating wall includes at least one sensor to monitor the at least one window of the separating wall for unexpected movements such as a hand of an operator.

Preferably, the at least one sensor is switched off while a mandrel is passing the window of the separating wall.

In the present application, there is further disclosed a magazine for providing at least one tubular-shaped packaging casing suitable for receiving a flowable filling material in the production of sausage-shaped products, in particular sausages, comprising: a longitudinal magazine axis, at least one mandrel for holding at least one packaging casing, wherein the at least one mandrel has a longitudinal mandrel axis, which extends at least approximately parallel to the longitudinal magazine axis, and wherein the at least one mandrel comprises a free end at a first mandrel end, and at least one retaining element arranged at least at the proximity of the first mandrel end for releasably retaining the packaging casing on the at least one mandrel.

Preferably, the longitudinal magazine axis is oriented at least approximately vertically.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the at least one mandrel has a second mandrel end spaced apart from the first mandrel end along the longitudinal mandrel axis and is attached to mandrel carrier means.

Preferably, the mandrel carrier means are rotatable around the longitudinal magazine axis.

Preferably, the at least one retaining element is held by holding means coupled by a shaft to the mandrel carrier means for supporting the holding means and transmitting forces from the mandrel carrier means to the holding means.

Preferably, the mandrel carrier means have a first diameter and the holding means have a second diameter, and wherein the first diameter is greater than the second diameter.

Preferably, the at least one mandrel is arranged at the mandrel carrier means along a circular ring that is perpendicular to the magazine axis.

Preferably, the circular ring has a ring diameter, and the first diameter is greater than the ring diameter and/or the ring diameter is larger than the second diameter.

Preferably, the at least one mandrel comprises at least one support element for supporting the packaging casing, the at least one support element is preferably reversibly adjustable in its position along the mandrel.

In the present application, there is further disclosed a revolver comprising at least two magazines as mentioned above, wherein the at least two magazines are arranged on revolver carrier means, which are rotatable around a revolver axis extending at least approximately parallel to the longitudinal magazine axis.

Preferably, the revolver carrier means have at least a first position in which one magazine is arranged in a delivery position and at least a second position in which the further magazine is arranged in a feeding position.

Preferably, comprising at least one separating wall for separating the first position from the second position.

In the present application, there is further disclosed a production machine, in particular a clipping machine, for filling and closing a tubular or bag-shaped packaging casing to produce sausage-shaped products, in particular sausages, comprising: at least one magazine as mentioned above and/or at least one revolver as mentioned above, and a robot to pick-up a packaging casing provided at the magazine and/or at the revolver and to place it at a filling unit.

In the present application, there is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided preferably with at least a first filling tube and preferably a second filling tube and a first and preferably a second casing brake assembly, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a first gripper unit for gripping a tubular packaging casing supply and a second gripper unit for gripping the first casing brake assembly, the method comprises the steps of: removing the casing brake assembly from the filling tube by the second gripper unit; moving the robotic device into a take-up position for taking up by the first gripper unit a tubular packaging casing supply provided in a storage device; gripping the tubular packaging casing supply provided in a storage device by the first gripper unit; moving the robotic device from the take-up position toward the filling tube; transferring the tubular packaging casing supply onto the filling tube by the first gripper unit; releasing the tubular packaging casing supply onto the filling tube of the clipping machine by the first gripper unit, and positioning the casing brake assembly on the filling tube by the second gripper unit.

Preferably, the method further comprises the step of exchanging a first gripper unit of robotic device, for gripping a tubular packaging casing supply by a second gripper unit for gripping the at least first casing brake assembly, for reversibly removing the first casing brake assembly from the at least first filling tube.

Preferably, the method further comprises the step of securing the tubular packaging casing supply on the first filling tube by at least one retainer device.

Preferably, the robotic device includes at least a first sensor unit associated with the first gripper unit, for detecting the position of the gripper unit relative to the tubular packaging casing supply in the storage device and/or for detecting the position of the gripper unit relative to the filling tube.

Preferably, the first gripper unit at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the first gripper unit along a predefined moving path towards the filling tube of the clipping machine.

Preferably, the method further comprises the step of positioning the first gripper unit with its gripping axis coaxially to the central axis of the filling tube and in front of the filling tube; and shifting the tubular packaging casing supply onto the filling tube by the first gripper unit.

Preferably, the method further comprises the step of detecting by the first sensor unit the position of the tubular packaging casing supply on the filling tube; and releasing the tubular packaging casing supply onto the filling tube.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material may be fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the first gripper unit includes at least one further sensor unit for detecting the position of the gripper elements.

In the present application, there is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least at least a first filling tube and preferably a second filling tube onto each of which a packaging casing supply can be applied; a robotic device for transferring a packaging casing supply from the storage device onto a filling tube of the clipping machine, and having at least a first gripper unit for gripping a tubular packaging casing supply, and a second gripper unit for gripping a casing brake assembly of the clipping machine; and a control unit for at least partially controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

In the present application, there is further disclosed a robotic device including a gripper unit and arranged in a system for producing sausage-shaped products as mentioned above and controlled by the method as mentioned above.

In the present application, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly having at least a first filling tube for feeding the filling material into the tubular packaging casing stored on the filling tube and being closed at its first end, at least a first casing brake assembly, associated with the first filling tube, for applying a braking force to the tubular packaging casing while being pulled-off from the first filling tube, and a control unit for controlling at least the clipping machine, the robotic device includes: at least a first gripper unit for gripping a tubular packaging casing supply provided by the storage device, and for transferring said tubular packaging casing supply onto the at least first filling tube of the clipping machine; and at least a second gripper unit for gripping the at least first casing brake assembly, for reversibly removing the at least first casing brake assembly from the at least first filling tube; and the storage device includes: at least a first storage assembly in which at least one tubular packaging casing supply is provided for being transferred by the robotic device onto the at least first filling tube of the clipping machine.

Preferably, a receiving device is provided for at least temporarily receiving the first and/or the second gripper unit, wherein, preferably, the receiving device is provided at the clipping machine.

Preferably, the receiving device includes at least a first holding unit and a second holding unit for at least temporarily accommodating the first and/or second gripper unit.

Preferably, at least one retainer device is provided for temporarily securing the tubular packaging casing supply on the first filling tube in the refill position.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the first gripper unit relative to the storage device and/or the position of the first gripper unit relative to the first and/or second filling tube arranged in the refill position.

Preferably, the robotic device includes a second sensor unit for determining a gripping force applied to the tubular packaging casing supply by the first gripper unit.

Preferably, the storage device includes at least a third sensor unit for detecting the presence or absence of a tubular packaging casing supply in the storage device.

Preferably, the system further including a hanging line arranged downstream the discharge device, for suspending the sausage-shaped products discharged from the clipping machine by the discharge device onto a rod-like element, like a smoking rod, the hanging line includes a control unit for controlling at least the hanging line, wherein, preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

In the present application, there is further disclosed a method for producing sausage-shaped products in a system as mentioned above, the method comprises the steps of: producing a sausage-shaped product by a clipping machine having an at least first filling tube onto which a tubular packaging casing is stored into which filling material is fed, the method further comprises the steps of: moving the at least first filling tube from a filling position, in which filling material is fed into the tubular packaging casing, into a refill position, in which a tubular packaging casing supply is transferred onto the at least first filling tube, removing by the robotic device a first casing brake assembly from the at least first filling tube being in the refill position, and transferring by the robotic device a tubular packaging casing supply provided by a storage device onto the at least first filling tube being arranged in the refill position.

Preferably, the method further comprises the step of positioning by the robotic device the first casing brake assembly onto the at least first filling tube.

Preferably, the method further comprises the step of exchanging a first gripper unit of the robotic device, for gripping a tubular packaging casing supply by a second gripper unit for gripping the at least first casing brake assembly, for reversibly removing the first casing brake assembly from the at least first filling tube.

Preferably, the method further comprises the step of suspending the sausage-shaped product discharged by the discharge device on a rod-like element provided by the hanging line, wherein, preferably, the clipping machine controls at least partially the robotic device and/or the hanging line.

In the present application, there is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least two filling tubes, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a gripper unit for gripping a tubular packaging casing supply, the method comprises the steps of: moving the robotic device into a take-up position for taking up by the gripper unit a tubular packaging casing supply provided in a storage device; gripping the tubular packaging casing supply provided in a storage device by the gripper unit; moving the robotic device from the take-up position toward the filling tube; transferring the tubular packaging casing supply onto the filling tube by the gripper unit; and releasing the tubular packaging casing supply onto the filling tube of the clipping machine by the gripper unit.

Preferably, the robotic device includes at least a first sensor unit associated with the gripper unit, for detecting the position of the gripper unit relative to the tubular packaging casing supply in the storage device and/or for detecting the position of the gripper unit relative to the filling tube.

Preferably, the gripper unit includes at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the gripper unit along a predefined moving path towards the filling tube of the clipping machine.

Preferably, the method further comprises the step of position the gripper unit with its gripping axis coaxially to the central axis of the filling tube and in front of the filling tube; and shifting the tubular packaging casing supply onto the filling tube by the gripper unit.

Preferably, the method further comprises the step of detecting by the first sensor unit the position of the tubular packaging casing supply on the filling tube; and releasing the tubular packaging casing supply onto the filling tube.

Preferably, filling tube of the clipping machine is provided with a casing brake assembly, the method further comprises the step of: positioning the casing brake assembly in front of the filling tube after the tubular packaging casing supply has been shifted onto the filling tube and prior the tubular packaging casing supply has been released onto the filling tube by the gripper unit.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material is fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the gripper unit includes at least one further sensor unit for detecting the position of the gripper elements.

In the present application, there is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least two filling tubes onto each of which a packaging casing supply can be applied; a robotic device for transferring a packaging casing supply from the storage device onto a filling tube of the clipping machine; and a control unit for controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the first filling tube is provided with a first casing brake unit reversibly removable from the first filling tube and the second filling tube is provided with a second casing brake unit reversibly removable from the second filling tube, and wherein the control unit is configured to release the tubular packaging casing supply fed to the filling tube located in the refilling position when the respective casing brake unit is positioned in front of the filling tube shortly before being pushed onto the latter.

In the present application, there is further disclosed a robotic device including a gripper unit and arranged in a system for producing sausage-shaped products as mentioned above and controlled by the method as mentioned above.

In the present application, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply, the clipping machine comprises: a filling tube assembly having at least a first filling tube for feeding the filling material into the tubular packaging casing stored on the filling tube and closed at its first end, at least a first casing brake assembly, associated with the first filling tube, for applying a braking force to the tubular packaging casing while being pulled-off from the first filling tube, and a control unit for controlling at least the clipping machine, the robotic device includes: a gripper unit for gripping a tubular packaging casing supply provided by the storage device, and for transferring said tubular packaging casing supply onto the at least first filling tube of the clipping machine; the storage device includes: at least a first storage assembly in which at least one tubular packaging casing supply is provided for being transferred by the robotic device onto the at least first filling tube of the clipping machine.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the gripper unit relative to the storage device and/or the position of the gripper unit relative to the first and/or second filling tube arranged in the refill position.

Preferably, the robotic device includes a second sensor unit for determining a gripping force applied to the tubular packaging casing supply by the gripper unit.

Preferably, the storage device includes at least a third sensor unit for detecting the presence or absence of a tubular packaging casing supply in the storage device.

Preferably, the system further includes a hanging line arranged downstream the discharge device, for suspending the sausage-shaped products discharged from the clipping machine by the discharge device onto a rod-like element, like a smoking rod, the hanging line includes a control unit for controlling at least the hanging line.

Preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

In the present application, there is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least fist filling tube, and transferring by the robotic device a tubular packaging casing supply provided by a storage device onto the at least first filling tube being arranged in the refill position.

Preferably, the method further comprises the step of suspending the sausage-shaped product discharged by the discharge device on a rod-like element provided by the hanging line.

Preferably, the method further comprises the step of least partially controlling by the clipping machine the robotic device and/or the hanging line.

Further advantages and preferred embodiments of the present invention will be described in the following together with the drawings listed below. The expressions "left", "right", "below" and "above" used in the following description, are referred to the drawings in an alignment such that the reference numbers and the notation of the figures used can be read in normal orientation.
- Fig. 1:: is a schematic view showing the principal design of a clipping machine for producing sausage-shaped products;
- Fig. 2:: is a perspective view to the front side of the system for producing sausage-shaped products according to the present invention;
- Fig. 3:: is a perspective view to the rear side of the system according to Fig. 2, with the robotic device in the take-up position;
- Fig. 4:: is a perspective view to the rear side of the system according to Fig. 2, with the robotic device in the allocation position;
- Fig. 5:: is a perspective view to the rear side of the system according to Fig. 2, with the gripper unit of the robotic device being coaxially arranged to the filling tube in the refill position;
- Fig. 6:: is a perspective view to the rear side of the system according to Fig. 2, with the gripper unit of the robotic device in the release position;
- Fig. 7:: is a plan view of the filling tube assembly used in the system according to the present invention;
- Fig. 8:: is a detailed plan view to the filling tube assembly of the system according to Fig. 2;
- Fig. 9:: is a perspective view to the gripper unit of the robotic device according to the present invention, in the opened position;
- Fig. 10:: is a perspective view to the gripper unit according to Fig. 9, in the closed position;
- Fig. 11:: is a perspective view of the main components of a hanging line used in the system according to the present invention; and
- Fig. 12:: is a top view of the filling tube assembly of the system according to Figs. 7 and 8.

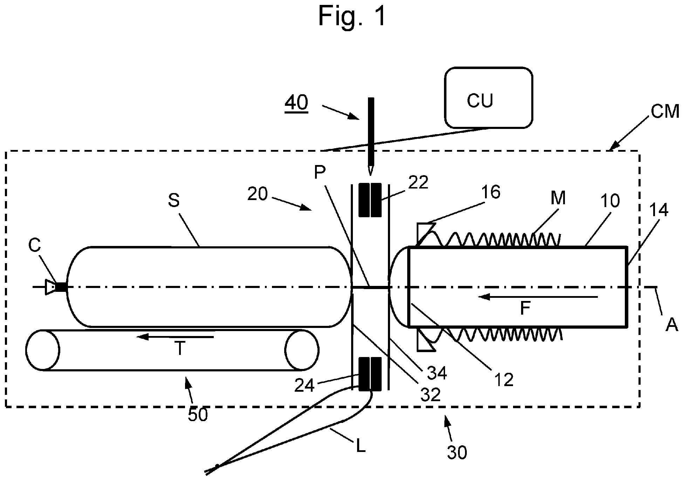

The general design of a clipping machine CM for producing sausage-shaped products S, like sausages, which contain a flowable filling material in a tubular packaging casing M, is shown schematically in Fig. 1. As its main components, clipping machine CM comprises a filling tube 10 having a longitudinally and horizontally extending central axis A, with a discharge opening for discharging the filling material at its first end 12 and a feeding opening for feeding the filling material into filling tube 10 in a feeding direction F to the discharge opening of filling tube 10 at its second end 14, for example by a feeding pump of a filler. Moreover, a casing brake assembly 16 is arranged on and coaxially with filling tube 10 in the region of first end 12 of filling tube 10. Filling tube 10 is made of a suitable material, like stainless steel.

Tubular packaging casing M made of a thin sheet material is stored on filling tube 10 in a folded manner like a concertina. Tubular packaging casing M is pulled-off during the process of producing sausage-shaped products S, in particular by the feeding pressure, by filling the filling material into tubular packaging casing M. Casing brake assembly 16 provides a braking force for allowing a controlled pulling-off of tubular packaging casing M during the filling process.

Clipping machine CM further comprises gathering means 30 for gathering the filled tubular packaging casing M and forming a plait-like portion P thereto, and a clipping device 20 for closing the filled portion of tubular packaging casing M by applying closure means, like closure clips C, to plait-like portion P. These components are all arranged downstream filling tube 10.

As can be inferred from Fig. 1, clipping device 20 is positioned immediately downstream first end 12 of filling tube 10, and coaxially aligned to filling tube 10. Clipping device 20 comprises a first and a second clipping tool 22, 24 formed by a punch 22 and a die 24. It has to be noted that punch 22 and die 24 may apply and close a single closure clip C for closing just filled tubular packaging casing M, or may apply and close two closure clips C at the same time, a first closure clip C for closing the rear end of just filled tubular packaging casing M for forming a sausage-shaped product S, and a second closure clip C for closing the front end of a tubular packaging casing M subsequently to be filled.

Gathering means 30 include a first displacer unit 32 and a second displacer unit 34, wherein first displacer unit 32 is positioned downstream second displacer unit 34. First and second clipping tools 22, 24 of clipping device 20 may be positioned between first and second displacer units 32, 34, at least for applying and closing one or two closure clips C to plait-like portion P. First displacer unit 32 can reversibly be moved parallel to feeding direction F of the filling material, for forming plait-like portion P of a desired length.

If it is intended to store sausage-shaped products S on a rod-like element, like a smoking rod, e.g. for further processing, like cooking or smoking, a suspension element L, like a suspension loop, may be provided and attached to one end of each of sausage-shaped products S, or at one end of a chain of sausage-shaped products S. Suspension element L may be fed to one of closing tools 22, 24, and may be fixed to the respective end of sausage-shaped product S by means of closure clip C that closes said end of sausage-shaped product S.

For separating sausage-shaped product S just produced from the remaining tubular packaging casing M stored on filling tube 10, a cutting device 40 may be provided. Said cutting device 40 cuts the tubular packaging casing M upstream closure clip C that closes the just filled portion of tubular packaging casing M. In case that two closure clips C have been applied to plait-like portion P by clipping device 20, cutting device 40 cuts plait-like portion P between said two closure clips C.

For discharging a sausage-shaped product S just produced from clipping machine CM in a transportation direction T being at least substantially the same as feeding direction F, a discharge device 50 is arranged downstream clipping device 20, which may be a belt conveyor comprising a conveyor belt and guide rollers.

For storing sausage-shaped products S on a rod-like element, suspension element L is caught by a catching device (not shown in Fig. 1), like a catching needle, which guides suspension element L towards the rod-like element.

Clipping machine CM further comprises a control unit CU for controlling clipping machine CM, and particularly, the components of clipping machine CM, like first and second clipping tool 22, 24 of clipping device 20, and first and second displacer unit 32, 34 of gathering means 30.

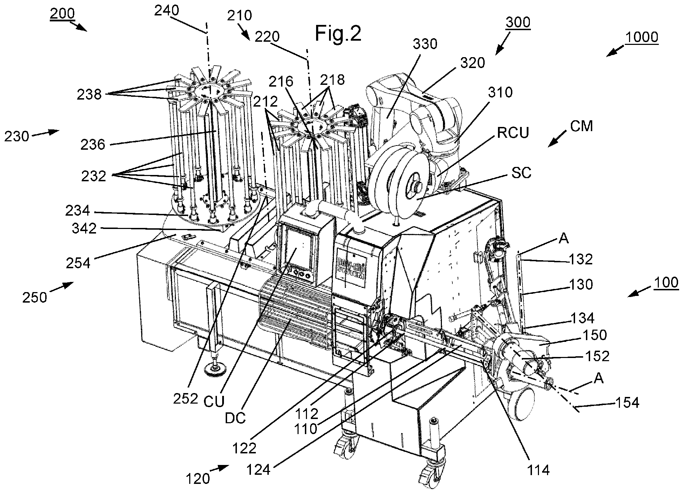

Fig. 2 is a perspective view to the front side of the system 1000 according to the present invention, for producing sausage-shaped products S.

As it can be seen in Fig. 2, system 1000 includes a clipping machine CM having a control unit CU. Clipping machine CM comprises a clipping device and gathering means, both not visible in Fig. 2, but designed as explained in conjunction with Fig. 1. Clipping machine CM further comprises a discharge device DC and a filling tube assembly 100.

As it further can be seen in Fig. 2, a supply SC of closure clips C is provided above clipping machine CM. The supply of closure clips C, or clip supply SC, includes two reels with closure clips C stored thereon in the form of chains of clips. From the clip supply SC, the chains of clips are guided towards the closing region of clipping machine CM.

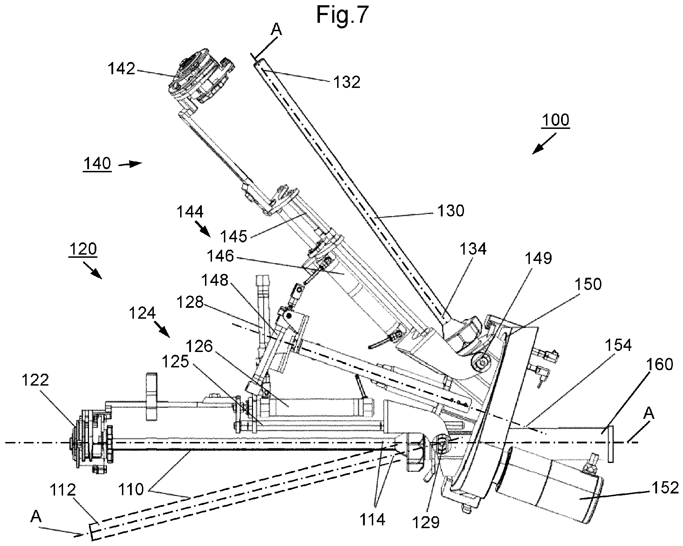

Filling tube assembly 100 comprises a first filling tube 110 having a first end 112 and a second end 114, a first casing brake assembly 120 associated with first filling tube 110, a second filling tube 130 having a first end 132 and a second end 134, and a casing brake assembly 140 associated with second filling tube 130. First and second filling tubes 110, 130 are pivotally coupled to a revolver plate 150 by their second ends 114, 134 via a respective hinge (cf. Fig. 7).

First filling tube 110 faces with its first end 112 in feeding direction F towards the closing region of clipping machine CM, in which the clipping device and the gathering means are arranged. In the arrangement of Fig. 2, first filling tube 110 is in the filling position.

Second filling tube 130 faces with its first end 132 to the rear side of clipping machine CM. Second filling tube 130 is in the refill opposition, in which tubular packaging casing supply M may be arranged on second filling tube 130.

A first casing brake assembly 120 is associated with first filling tube 110 and includes a first casing brake unit 122 positioned in the region of first end 112 of first filling tube 110, and is pivotally coupled to revolver plate 150 by a first telescopic casing brake holder unit 124. First casing brake holder unit 124 is designed such that first casing brake unit 124 may linearly reversibly shifted along first filling tube 110 onto its first end 112 and pivoted away from first end 112 of first filling tube 110. First casing brake holder 124 includes a telescopic guidance 125 and a telescopic drive 126 for extending and retracting telescopic guidance 125. Telescopic drive 126 is a linear drive, particularly, a piston/cylinder drive. A pivot drive unit 128, also in the form of a piston/cylinder drive, is provided for pivoting first casing brake assembly 120 relative to first filling tube 110 about a pivot point 129 at which first casing brake assembly 120 is coupled to revolver plate 150 (cf. Fig. 7).

A second casing brake assembly 140 includes a second casing brake unit 142 pivotally coupled to revolver plate 150 by a second telescopic casing brake holder unit 144, for linearly reversibly shifting second casing brake assembly 140 along second filling tube 130 onto its first end 132, and for pivoting second casing brake unit 142 away from first end 132 of second filling tube 130. Second casing brake holder unit 144 is of similar design as first casing brake holder unit 124, and includes a telescopic guidance 145 and a telescopic drive 146 for extending and retracting telescopic guidance 145. Telescopic drive 146 is a piston/cylinder drive. A pivot drive unit 148, also in the form of a piston/cylinder drive, is provided for pivoting second casing brake assembly 140 relative to second filling tube 130 about a pivot point 149 at which second casing brake assembly 140 is coupled to revolver plate 150 (see also Fig. 7).

In Fig. 7, telescopic guidance 125 of first casing brake holder 124 is in the retracted position, in which first casing brake unit 122 is positioned on first end 112 of first filling tube 110, whereas telescopic guidance 145 of second casing brake holder 144 is in the extended position, in which second casing brake unit 142 is moved away from first end 132 of second filling tube 130.

The pivot movement of filling tubes 110, 130 and casing brake assemblies 120, 140 is executed in a common plane, which is at least approximately with respect to clipping machine CM.

Filling tube assembly 100 further includes a drive device 152 including an electric motor and a suitable transmission or gear unit for rotating revolver plate 150 about a rotation axis 154. Rotation axis 154 and filling tubes 110, 130 are arranged in a common plane that is aligned at least approximately horizontally, when one of filling tubes 110; 130 is in the refill position and the respective other filling tube 130; 110 is in the filling position.

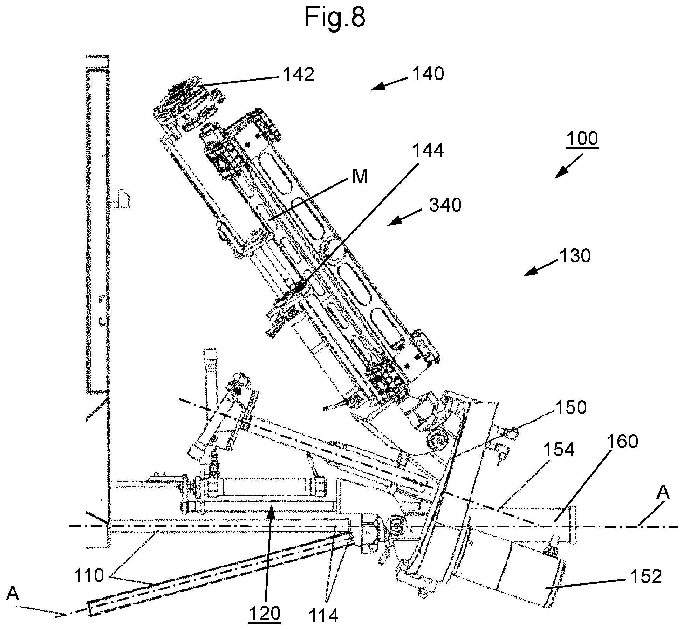

Filling tube 110 positioned in the filling position may pivoted laterally outwardly in the common plane of rotation axis 154, from the filling position as shown in Figs. 2, 7 and 8 into a lateral position as indicated in dotted lines in Figs. 7 and 8. In the lateral position and the refill position, filling tubes 110, 130 are arranged at least approximately equiangular to rotation axis 154.

As it further can be seen in Fig. 2, filling tube assembly 100 is provided with a feeding socket 160 fixed to revolver plate 150 and facing a way from clipping machine CM. Feeding socket 160 is coaxially aligned with central axis A of filling tube 130 when in the filling position (cf. Figs 7, 8). A feeding device, like a filler, for feeding filling material, like sausage meat, to clipping machine CM, may be coupled via feeding socket 160 to clipping machine CM.

As explained in conjunction with the principal design of clipping machine CM shown in Fig. 1, tubular packaging casing supply M is made of a thin sheet of tubular material that is folded like a concertina. Tubular packaging casing supply M thereby forms a hollow stick of folded tubular casing, which may be transferred onto filling tube 110, 130. Tubular packaging casing M may further be closed at one end by a closure clip C, which forms the front end of the first sausage-shaped product S to be produced with this tubular packaging casing supply M. For handling tubular packaging casing supply M, it is of advantage that said tubular packaging casing supply M has an inherent stability, for preventing tubular packaging casing supply M from unintentional unfolding, and that is sufficient for transferring tubular packaging casing supply M at least from a storage device onto filling tube 110, 130 of clipping machine CM.

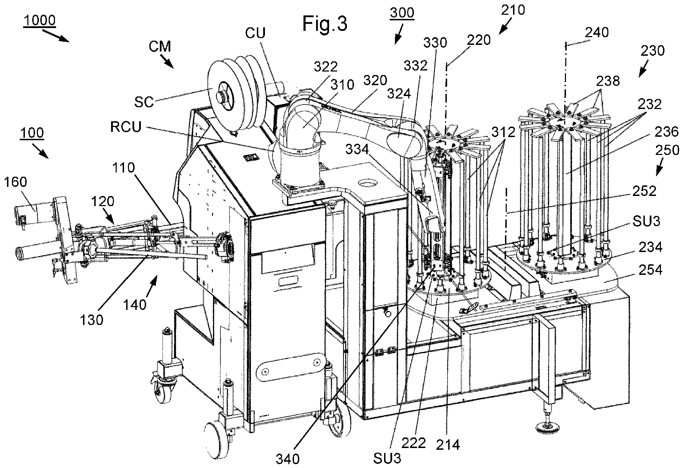

System 1000 for producing sausage-shaped products S further comprises a storage device 200 for storing a plurality of tubular packaging casing supplies M to be loaded onto first and second filling tubes 110, 130 when arranged in the refill position. Storage device 200 as shown in Figs. 2 and 3 comprises a first storage assembly 210 and a second storage assembly 230.

First storage assembly 210 includes a plurality of vertically arranged receiving pins 212 of equal length, that are fixed on the upper side of a circular rotation plate 214 by their lower ends, and on a circle concentrically to the center of rotation plate 214 (cf. Fig. 3). A central post 216 is mounted to rotation plate 214 with its lower end, and is coaxially aligned to a rotation axis 220 of rotation plate 214. Rotation axis 220 extends vertically to rotation plate 214 and through its center. At the upper end of central post 216, retaining elements 218 are arranged. Retaining elements 218 are made of an elastic material, like rubber, have an approximately rectangular shape and extend radially outwardly from central post 216 towards the upper ends of receiving pins 212, such that their outer ends are laid up with pretension on the upper ends of receiving pins 212. Storage device 210 further includes a rotary drive 222 (cf. Fig. 3) coupled to the lower side of rotation plate 214, for rotating first storage assembly 210 about rotation axis 220.

Second storage assembly 230 is of identical design as first storage assembly 210, and includes a rotation plate 234 with a vertical rotation axis 240 and a plurality of receiving pins 232 arranged vertically with their lower ends attached to rotation plate 234, and on a circle concentrically to the center of rotation plate 234. A central post 236 is arranged at the center of rotation plate 234 and coaxially aligned to rotation axis 240 of rotation plate 234 and through its center. At the upper end of central post 236, retaining elements 238 are arranged. Retaining elements 238 that are also made of an elastic material, like rubber, have a rectangular shape and extend radially outwardly towards the upper ends of receiving pins 312, and are laid up with pretension on the upper ends of receiving pins 312. Second storage assembly 230 is rotatable about rotation axis 240 by a rotary drive 242 mounted to the lower side of rotation plate 234.

In Fig. 2, first storage assembly 210 is positioned in an unloading position, in which tubular packaging casing supply M is unloaded from first storage assembly 210 to be transferred onto second filling tube 130 arranged in the refill position, and storage assembly 230 is in a loading position, in which tubular packaging casing supply M is loaded onto storage assembly 230.

Storage device 200 further includes a rotation assembly 250 for rotating first and second storage assemblies 210, 230 about a rotation axis 252. First and second storage assemblies 210, 230 are mounted on a common rotation table 254 on the same height and with rotation axes 220, 240 are aligned parallel to each other and to rotation axis 252. Rotation table 254 of rotation assembly 250 is rotated about rotation axis 252 by a rotation mechanism arranged below rotation table 254.

System 1000 for producing sausage-shaped products S further comprises a robotic device 300 having a control unit RCU for controlling the movement of robotic device 300. Robotic device 300 has a base 310, a first arm 320 having a first end 322 and a second end 324. First arm 320 is pivotally coupled to base 310 by its first end 322. Robotic device 300 further has a second arm 330 with a first end 332 and a second end 334. Second arm 330 is pivotally coupled to second end 324 of first arm 320 by its first end 332 (cf. Fig. 3). Base 310 further includes a rotary drive mechanism for being rotated about a vertical rotation axis together with first and second arms 320, 330 relative to clipping machine CM.

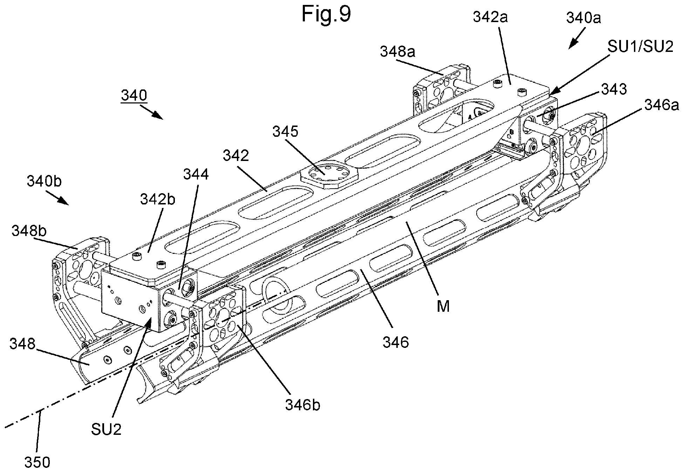

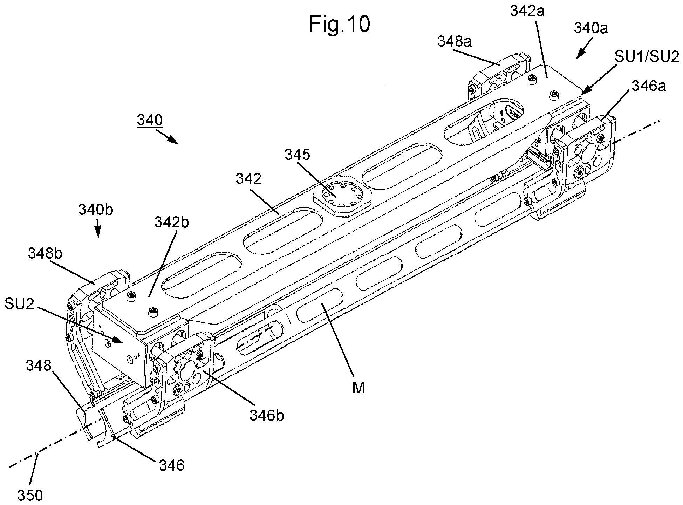

As particularly can be seen in Fig. 3, which is a perspective view to the rear side of the system according to Fig. 2, a gripper unit 340 for gripping tubular packaging casing supply M is mounted at second end 334 of second arm 330. In Fig. 3, gripper unit 340 is in the take-up position, in which tubular packaging casing supply M provided by first storage assembly 210 and hold ready on a receiving pin 212. Said receiving pin 212, from which tubular packaging casing supply M is took up by gripper unit 340, is arranged in the provision position. The design and function of gripper unit 340 will be explained in detail in conjunction with Figs. 9 and 10 below.

Control unit RCU of robotic device 300 according to the embodiment of Fig. 2, is mounted to base 310 of robotic device 300. Robotic device 300 is mounted to the framework of clipping machine CM by its base 310. Alternatively, a separate framework for robotic device 300 may be provided, which is arranged in a defined position relative to clipping machine CM, or which is fixedly coupled to the framework of clipping machine CM.

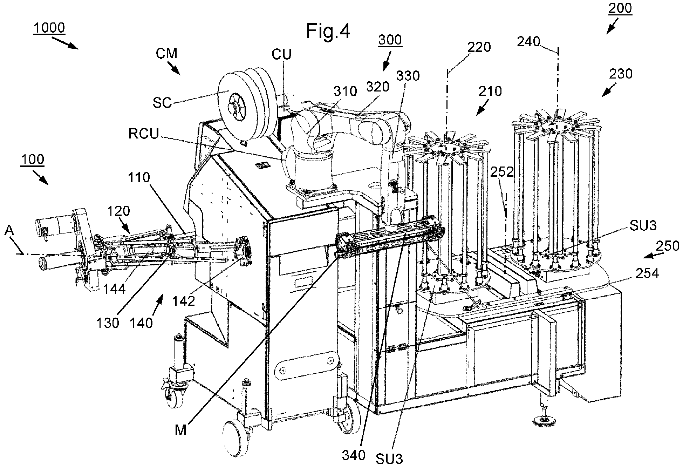

Fig. 4 shows robotic device 300 in an allocation position. In this position, tubular packaging casing supply M is removed from first storage device 210 and held by gripper unit 340 of robotic device 300 approximately horizontally and centrally behind clipping machine CM, to be transferred next onto second filling tube 130 being arranged in the refill position.

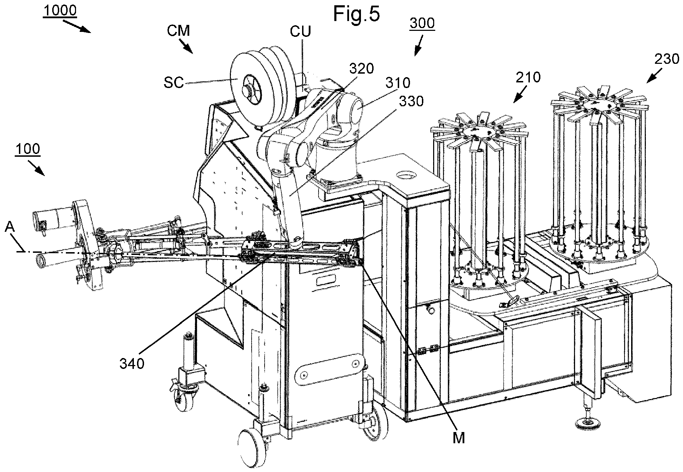

Fig. 5 is a perspective view to the rear side of the system 1000 with gripper unit 340 of robotic device 300 being coaxially arranged to central axis A of second filling tube 130 in the refill position, and onto which tubular packaging casing supply M has to be transferred.

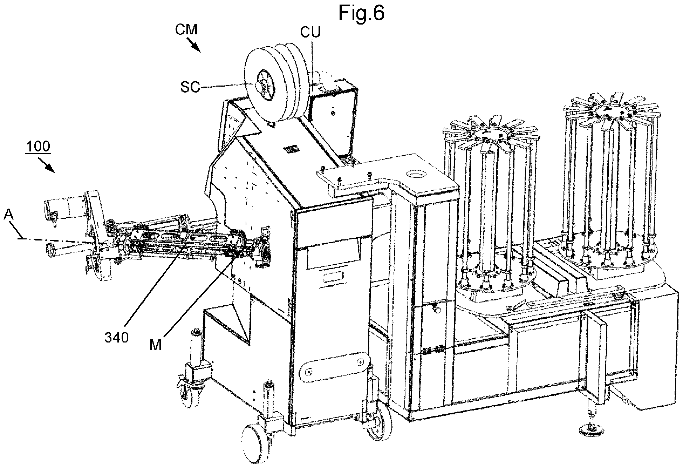

Fig. 6 shows robotic device 300, and particularly, gripper unit 340 in the release position, in which tubular packaging casing supply M is positioned on filling tube 130 by gripper unit 340. For clarity reasons, in Fig. 6, only gripper unit 340 of robotic device 300 is shown.

From the position shown in Fig. 5, tubular packaging casing supply M is moved linearly along central axis A of filling tube 130 and shifted thereon by robotic device 300, which thereby moves into the release position shown in Fig. 6. In the release position, gripper unit 640 is moved from its closed position (cf. Fig. 9) in which tubular packaging casing supply M is grasped, into its opened position (cf. Fig. 10), for releasing tubular packaging casing supply M onto filling tube 130.

Fig. 8 is a plan view to filling tube assembly 100 of clipping machine CM according to Fig. 6, with gripper unit 340 in the release position, and immediately prior releasing tubular packaging casing supply M onto filling tube 130.

In the situation shown in Fig. 6, second casing brake assembly 140 is pivoted away from second filling tube 130, such that gripper unit 340 together with tubular packaging casing supply M may access second filling tube 130 (cf. Fig. 7).

Thereafter, an as can be seen in Fig. 8, second casing brake assembly 140 is pivoted towards second filling tube 130, such that second casing brake unit 142 is positioned in front of first end 132 of second filling tube 130. Second casing brake holder unit 144 is in the extended position. In this position of second casing brake assembly 140, gripper unit 340 is moved into its open position, for releasing tubular packaging casing supply M onto second filling tube 130.

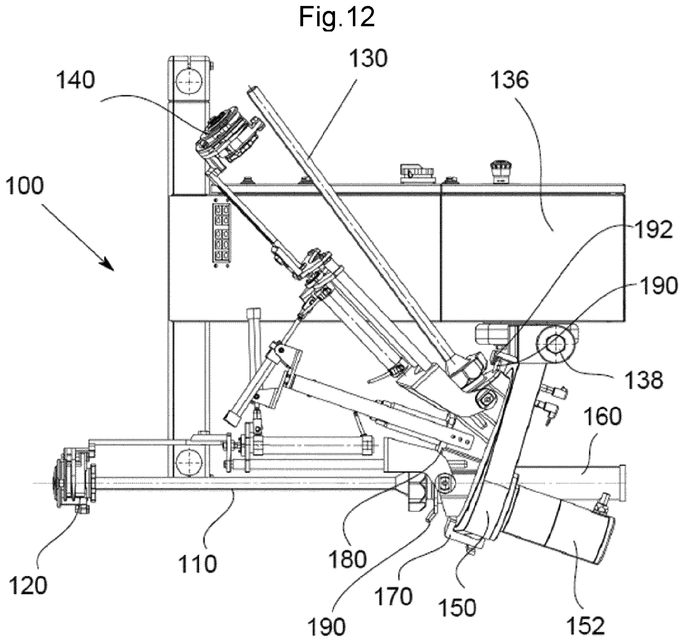

Additionally, as can be best seen in Fig. 12, filling tube assembly 100 of clipping machine CM is mounted on a framework 136 via a joint portion 138. In this particular embodiment, joint portion 138 is mounted on a side wall of framework 136, but may be also positioned on any other suitable positions such as an upper wall of framework 136. Joint portion 138 may be shifted linearly and/or rotated such that filling tube 130 of filling tube assembly 100 is positioned in front of clipping machine CM.

Fig. 9 is a perspective view to gripper unit 340 of robotic device 300 in the opened position.

Gripper unit 340 has a first end 340a and a second end 340b. Gripper unit 340 comprises a longitudinally extending, essentially rectangular base plate 342 with a first end 342a that coincides with first end 340a of gripper unit 340, and a second end 342b that coincides with second end 340b of gripper unit 340. On the lower side of base plate 342 (according to Fig. 9), and in the regions of its first end 342a, a first drive assembly 343 is arranged that includes two piston/cylinder drives with the pistons extending in a plane parallel to the plane of base plate 342 and at least approximately vertical to its longitudinal extension. A second drive assembly 344, which is identically designed to first drive assembly 343, is mounted to base plate 342 in the regions of its second end 342b, and with the pistons of the piston/cylinder drives extending at least approximately vertical to the longitudinal extension of base plate 340 and in the same plane as the pistons of first drive assembly 343. At the outer ends of the pistons of the piston/cylinder drives of first and second drive assemblies 343, 344, brackets 346a, 346b, 348a, 348b are mounted. Brackets 346a, 346b, 348a, 348b are angled and fixed to one end to the pistons of the piston/cylinder drives such that their other ends face downwards from base plate 342, and brackets 346a, 348a; 346b, 348b at first and second ends 342a, 342b of base plate 342 are directed to each other.

Gripper unit 340 is provided with a first gripper element 346 and a second gripper element 348, each in the form of an angled bar having an approximately V-shaped cross section and a length corresponding to the length of base plate 342. First and second gripper elements 346, 348 are mounted to brackets 346a, 348a; 346b, 348b such that they are aligned parallel to each other and with the open side of the "V" facing to each other. First and second gripper elements 346, 348 may reversibly be moved by first and second drive assemblies 343, 344, between an opened position, as shown in Fig. 9, and a closed position, as shown in Fig. 10. First and second gripper elements 346, 348 are aligned parallel and equidistant to a central axis or gripping axis 350 there between. In the closed position, a tubular packaging casing supply M is grasped by first and second gripper elements 346, 348 and held coaxially to gripping axis 350.

System 100 according to the present invention may further include a hanging line HL for suspending sausage-shaped products S produced in clipping machine CM and discharged from clipping machine CM by discharge device DC, on a rod-like element R, like a smoking rod.

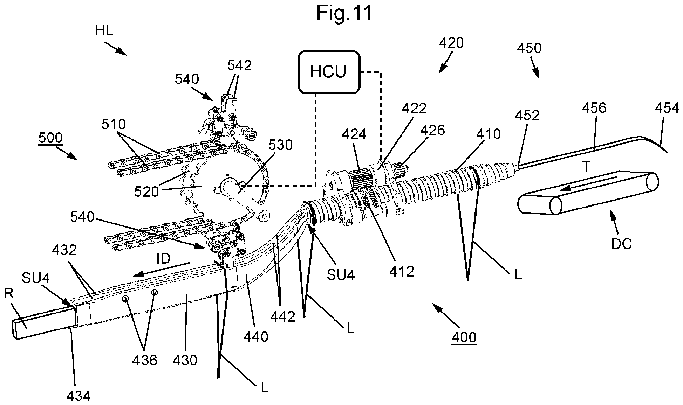

Fig. 11 is a perspective view of the main components of hanging line HL. Hanging line HL includes amongst others, a control unit HCU, an infeed device 400 and a transport device 500. In Fig. 11, only the conveyor unit of discharge device DC is shown, which in this case is a belt conveyor for conveying sausage-shaped products S out of clipping machine CM.

Infeed device 400 includes an actively driven infeed conveyor in the form a spindle 410 with an outer surface at least similar to a screw thread that is supported by a spindle bearing 420, a guide bar 430 and a connecting element 440 connecting the downstream end of spindle 410 with the upstream end of guide bar 430. Connecting element 440 has the shape of a segment of a circle, at least at its upper surface.

The upstream end of connecting element 440 has an approximately circular cross-section adapted to the cross-section of screwed spindle 410, to allow a sliding transfer of a suspension element L from screwed spindle 410 onto connecting element 440. The downstream end of connecting element 440 has an at least approximately rectangular shape adapted to the cross-sectional shape of guide bar 430.

In the upper surface of connecting element 440, two parallel grooves 442 are arranged, which extend in an infeed direction ID. Also, in the upper surface of guide bar 430, two parallel grooves 432 are arranged, which extend in infeed direction ID, and which are aligned with grooves 442 in connecting element 440.

A portion of screwed spindle 410 has a toothed surface 412 which is engaged by a toothed portion 424 of a support roller 422 of spindle bearing 420. At a free end of support roller 422, a toothed wheel 426 is arranged, via which support roller 422 may be rotated, for driving screwed spindle 410 at a desired speed. As a drive for infeed device 400, an electric motor or the like may be provided.

For supporting guide bar 430, holes 436 are provided in both side surfaces of guide bar 430, into which indexing pins of an indexing device may engage. At its upstream end, guide bar 430 is fixedly coupled to connecting element 440. The upstream end of connecting element 440 is radially supported by screwed spindle 410. Connecting element 440 has an engaging element, like a pin, at its upstream end that extends into the downstream end of spindle 410, in which it is rotatably supported, e.g. in a roller bearing, for enabling a rotational movement of screwed spindle 410 relative to connecting element 440. Pairs of oppositely arranged indexing pins which may engage holes 436 in guide bar 430 provide radial and rotational support for guide bar 430, and enable passage of suspension elements L along guide bar 430, by pairwise alternatingly engaging and disengaging holes 436 in guide bar 430.

A support element 434 extends from the downstream end guide bar 430, for supporting a rod-like element R to be loaded with sausage-shaped products S. The other end of rod-like element R (not shown) is also supported so that rod-like element R is held horizontally aligned at its two ends during loading sausage-shaped products S thereon. A suspension element L guided along guide bar 430 may thereby be transferred onto said rod-like element R. The upstream end of rod-like element R is supported on support element 434, such that rod-like element R in the loading position shown in Fig. 11, and guide bar 430 are arranged approximately coaxially.

In Fig. 11, for clarity reasons, only an upstream portion of rod-like element R and the suspension elements L of the sausage-shaped products S are shown, with the suspension elements L representing the sausage-shaped products S to be transported along infeed device 400.

As further shown in Fig. 11, a longitudinally extending catching device 450, like a catching needle, is attached to the upstream end of spindle 410 and extends coaxially thereto into the counter direction of infeed direction ID and along discharge device DC. Catching device 450 has a first end 452, with which catching device 450 is mounted to spindle 410, and a second end 454, which extends into the closing region of clipping machine CM for catching suspension element L of sausage-shaped product S just produced, and a central portion 456 extending between first and second ends 452, 454. Second end 454 is curved downwardly into the closing region of clipping machine CM. Central portion 456 of catching device 450 is a straight portion and is aligned at least approximately parallel to transportation direction T of the conveyor unit of discharge device DC. A suspension element L caught by catching device 450 is guided by catching device 450 to spindle 410 while the body of sausage-shaped product S laying on the conveyor unit of discharge device DC, is conveyed out of clipping machine CM.

A further component of hanging line HL is transport device 500 for transporting the sausage-shaped products S fed into hanging line HL by infeed device 400, along guide bar 430 and rod-like element R, and for placing said sausage-shaped products S on rod-like element R.

Transport device 500 is arranged vertically above guide bar 430 and rod-like element R in the loading position, and extends in infeed direction ID. Transport device 500 according to Fig. 11 is embodied as a chain conveyor forming the conveyor means having two endless conveyor chains 510 which are arranged parallel to each other, and with each conveyor chain 510 being wound about a first and a second deflection roller 520. In Fig. 2, only first deflection rollers 520 are shown, which are arranged on a common axle 530. First deflection rollers 520 form the upstream end of horizontally arranged transport device 500. The (not shown) downstream end of transport device 500 is of identical constitution, and includes two second deflection rollers about which conveyor chains 510 are wound, and which are also arranged on a common axle.

Transport device 500, and particularly conveyor chains 510 are actively driven by one of its common axles 530 of the deflection rollers 520 via, for example, an electric motor. Transport device 500 is driven such that the lower run of conveyor chains 510 moves in infeed direction ID.

Transportation elements 540 are arranged in regular intervals on conveyor chains 510. Each transportation element 540 includes a pair of hooks 542, with each hook 542 engaging one of grooves 432, 442 of guide bar 430 and connecting element 440 for engaging a suspension element L of a sausage-shaped product S to be suspended on a rod-like element R.

Hanging line HL according to Fig. 11 is further provided with a fourth sensor unit SU4 arranged in the region of support element 434. In Fig. 11, only possible positions of fourth sensor unit SU4 are indicated.

Fourth sensor unit SU4 may detect the presence or absence of a rod-like element R in the loading position. Alternatively or additionally, the same fourth sensor unit SU4, or an additional sensor unit, may also detect the presence of a sausage-shaped product S while being passed by a transportation element 540. It has to be noted that, for detecting the presence of a sausage-shaped product S at an earlier time point, fourth sensor unit SU4 may also be arranged upstream transport device 500, e.g. in the region of the downstream end of spindle 410.

Fourth sensor unit SU4 is coupled to control unit HCU, which controls the operation of hanging line HL, like the operation of infeed device 400 or transport device 500. Accordingly, based on a signal received from fourth sensor unit SU4, control unit HCU may control e.g. transport device 500, which may be stopped in the case that fourth sensor unit SU4 has detected the absence of a sausage-shaped product, or control unit HCU may control the drive device of spindle 410, e.g. such that the speed of spindle 410 is increased or decreased, in order to control the distance or time between two sausage-shaped products being transferred from spindle 410 to guide bar 430.

Furthermore, control unit HCU of hanging line HL is coupled to control unit CU of clipping machine CM. Thus, the signal from fourth sensor unit SU4 may also be send to control unit CU, such that also control unit CU of clipping machine CM may affect the operation of hanging line HL. Hanging line HL may completely be stopped by control unit CM of clipping machine CM, e.g. in case of the absence of sausage-shaped products S or rod-like elements R, or in case of any malfunction of hanging line HL. Moreover, the general operation of hanging line HL, like starting or stopping hanging line HL during the production process, may be controlled by clipping machine CM. Control unit HCU of hanging line HL may alternatively or additionally be connected to control unit RCU of robotic device 300, such that also robotic device 300 may at least partially control hanging line HL, like stopping hanging line HL when a malfunction of robotic device has been detected.

For producing sausage-shaped products S in system 1000, tubular packaging casing M, stored on first filling tube 110 in the form of tubular packaging casing supply M and closed at its front end by a closure clip C, is filled with filling material which is fed through first filling tube 110 of filling tube assembly 100 into tubular packaging casing M in feeding direction F. Thereby, tubular packaging casing M is pulled off from first filling tube 110 by the feeding pressure of the filling material. First casing brake assembly 120 exerts a braking force onto tubular packaging casing M while being pulled off from first filling tube 110. After a predetermined portion of filling material is fed into tubular packaging casing M, filled tubular packaging casing M is gathered and a plait-like portion is formed to the gathered portion of tubular casing M by the gathering means. Two closure clips C are applied to the plait-like portion and closed by the clipping device, a first closure clip C for closing the just filled tubular packaging casing M for forming a sausage-shaped product S and a second closure clip C for closing the front end of sausage-shaped product S subsequently to be produced. A suspension element L may be provided and attached to one end of sausage-shaped product S by means of one of a closure clips C. For severing the just produced sausage-shaped product S from the remaining tubular packaging casing supply M, the plait-like portion is cut between the two closure clips C, and the sausage-shaped product S just produced may be discharged from clipping machine CM by discharge device DC in transportation direction T.

Suspension element L of sausage-shaped product S just produced, is caught by catching device DC and guided towards infeed device 400 of hanging line HL. After sausage-shaped product S, and more particular, the body of sausage-shaped product S, has left the conveyor unit of discharge device DC, sausage-shaped product S is transferred by spindle 410 of infeed device 400 via connecting element 440 to guide bar 430. At the left end of guide bare 430, suspension element L is caught by hooks 542 of one of transportation elements 540, and sausage-shaped product S is guided along guide element 430 and rod-like element R to a desired position on rod-like element R. Hooks 542 are guided in grooves 432 of guide bar 430, such that they engage suspension element L. At the desired position on rod-like element R, where sausage-shaped product S has to be placed, hooks 542 are pivoted (counter clockwise in Fig. 7) to release suspension elements L, and thus, sausage-shaped products S, on the desired position on rod-like element R. Transport device 500 thereby subsequently positions sausage-shaped products S on rod-like element R, starting from its left end towards its right end, until a predefined number of sausage-shaped products S is stored on rod-like element R, and with predefined distances there between.

After the tubular packaging casing supply M on first filling tube 110 is used up, first filling tube 110 is pivoted from the filling position (cf. Fig. 2) into the lateral position (indicated in Figs. 7 and 8). Filling tube assembly 100 is then rotated about rotation axis 154 of revolver plate 150 and about an angle of at least approximately 180°. During this rotational movement of filling tube assembly 100, first filling tube 110 is transferred into the refill position and second filling tube 130, with a tubular packaging casing supply M stored thereon, is moved into the lateral position. Thereafter, second filling tube 130 is pivoted into the filling position, second casing brake unit 142 is shifted onto first end 132 of filling tube 130, and the production of sausage-shaped products S may be continued. During the production process, a further tubular packaging casing supply M is transferred towards first filling tube 110 now in the refill position, and is stored thereon.

Refill of tubular packaging casing supply M onto second filling tube 130 arranged in the refill position, is executed by robotic device 300, which takes up a tubular packaging casing supply M from first storage assembly 210 of storage device 200, being in the unloading position, and transfers this tubular packaging casing supply M onto second filling tube 130 being arranged in the refill position.

Any position of robotic device 300, like the take-up position, the allocation position and the release position as well as the moving paths of robotic device 300 between these positions are stored in control unit RCU of robotic device 300, e.g. in the form of coordinates referring to a respective coordinate system. The moving path of robotic device 300 may be programmed by an operator and transferred to control unit RCU of robotic device 300, or may directly be programmed into control unit RCU via a respective interface. Alternatively, robotic device 300 may manually be guided by an operator along a desired moving path that in the meantime is stored in control unit RCU. In all these cases, the movement of robotic device 300 is controlled by control unit RCU. Alternatively, the positions and the moving path of robotic device 300 may be stored in control unit CU of clipping machine CM, such that control unit CU of clipping machine CM may also control the movement of robotic device 300.

For refilling tubular packaging casing supply M onto second filling tube 130 arranged in the refill position, robotic device 300 is moved into the take-up position (cf. Fig. 3). In the take-up position, first and second gripper elements 346, 348 of gripper unit 340, which are in their opened position, are aligned parallel and laterally to tubular packaging casing supply M stored on receiving pin 212 of first storage assembly 210 in the provision position. Gripper unit 340 is aligned to receiving pin 212 such that the first end 340a of gripper unit 340 and the upper end of receiving pin 212 are at least approximately arranged at the same height. In this position, gripping axis 350, at least approximately, coincides with the central axis of receiving pin 212. Then, first and second drive assemblies 343, 344 are activated such that first and second gripper elements 346, 348 are moved into their closed position for grasping tubular packaging casing supply M.

Each of tubular packaging casing supplies M arranged on receiving pins 212 of first storage assembly 210, or on receiving pins 232 of second storage assembly 230, respectively, is aligned with its upper end, which may already be closed by a closure clip C, to the upper end of respective receiving pins 212, 232. In this position, retaining elements 218 of first storage assembly 210, and retaining elements 238 of second storage assembly 230, respectively, are laid-up with pretension on the upper ends of receiving pins 212, 232, and thereby, abut on the upper ends of tubular packaging casing supplies M stored thereon. Retaining elements 218, 238 thereby prevent tubular packaging casing supply M stored on receiving pins 212, 232 from unintentional unfolding and exceeding upwardly from receiving pins 212, 232 of first and second storage assemblies 210, 230.

For removing tubular packaging casing supply M from receiving pin 212, robotic device 300 moves gripper unit 340 vertically upwards along receiving pin 212, and about a length that corresponds to the length of base plate 342 of gripper unit 340. Thereby, it is ensured that tubular packaging casing M is completely removed from receiving pin 212, and collisions between gripper unit 340 and first storage assembly 210 are securely prevented. The tension applied to the upper end of tubular packaging casing supply M by retaining elements 218, 238 is selected such that tubular packaging casing supply M is securely held on retaining pins 212, 232, but may be removed from receiving pins 212, 232 without being damaged by retaining elements 218, 238, which are pushed or pivoted aside or upwards, preferably by gripper unit 340.

Robotic device 300 is then moved into the allocation position as shown in Fig. 4, in which gripper unit 340 is arranged at least approximately horizontally on the rear side of clipping machine CM. In this position, tubular packaging casing supply M is held ready close to the refill position of filling tube 130, whereby the time between the arrangement of second filling tube 130 in the refill position and the placement of tubular packaging casing supply M on second filling tube 130 is shortened, and possible downtimes of the production process are also shortened or prevented.

Second filling tube 130 is positioned in the refill position by rotating filling tube assembly 100 about rotation axis 154 of revolver plate 150. Second casing brake assembly 140, which is associated with second filling tube 130 such that second filling tube 130 and second casing brake assembly 140 are moved together towards the refill position, is in a position, in which second casing brake unit 142 is removed from first end 132 of filling tube 130, by elongating telescopic casing brake holder unit 144 and pivoting second casing brake unit 142 together with casing brake holder unit 144 towards rotation axis 154 of revolver plate 150.

When second filling tube 130 is arranged in the refill position, or a certain time period before, robotic device 300 is moved towards the refill position of second filling tube 130. Gripper unit 340 is positioned with its second end 340b immediately in front of first end 132 of second filling tube 130, with gripping axis 350 being coaxially aligned with central axis A of second filling tube 130.

Robotic device 300 is then moved into the release position by shifting gripper unit 340 along central axis A of filling tube 130, whereby tubular packaging casing supply M is transferred onto second filling tube 130. Tubular packaging casing supply M is shifted onto second filling tube 130 such that its end that is closed by a closure clip C, which is the upper end when arranged on receiving pins 212, 232 of first and second storage assemblies 210, 230, abuts first end 132 of second filling tube 130.

Then, second casing brake assembly 140 is activated to pivot back towards second filling tube 130, and to position casing brake unit 142 in front of first end 132 of second filling tube 130.

Gripper unit 340 is moved into its opened position for releasing tubular packaging casing supply M onto second filling tube 130. Second casing brake unit 142 positioned in front of first end 132 of second filling tube 130 prevents tubular packaging casing supply M from unintentional unfolding and falling off from second filling tube 130.

Subsequently, robotic device 300 is moved way from second filling tube 130 and back into the take-up position for grasping a further tubular packaging casing supply M provided on a further receiving pin 212 arranged in the provision position. Second casing brake unit 142 is moved onto first end 132 of second filling tube 130 by retracting telescopic casing brake holder unit 144, whereby tubular packaging casing supply M is finally secured on second filling tube 130.

In order to continue the production of sausage-shaped products S, filling tube assembly 100 is rotated about rotation axis 154 of revolver plate 150, such that first filling tube 110 is transferred into the refill position, and second filling tube 130 is moved into the lateral position in front of clipping machine CM. Second filling tube 130 with tubular packaging casing supply M thereon is pivoted into the filling position, and the production of sausage-shaped products S may be continued.

Refill of tubular packaging casing supply M onto first filling tube 110 is executed in the same manner as described in conjunction with second filling tube 130.

It has to be noted that filling tube assembly 100, for moving first and second filling tubes 110, 130 from the lateral position into the refill position and vice versa, may be rotated stepwise about an angle of approximately 180° in the same direction, i.e. clockwise or counter clockwise, such that each filling tube 110, 130 rotates about an angle of 360°, or reversibly about an angle of at least approximately 180°.

For enabling a correct grasping of tubular packaging casing supply M by gripper unit 340, and for exactly position tubular packaging casing supply M on first and second filling tubes 110; 130, the respective positions and movement paths of robotic device 300 and gripper unit 340 may be programmed and implemented into a respective control logic of robotic device 300 in control unit RCU of robotic device 300 or in the control unit CU of clipping machine CM.

In order to ensure a safe and reliable production process on system 1000, and to further ensure a safe refill operation, a first sensor unit SU1 is provided to gripper unit 340 of robotic device 300 (cf. Fig. 9). First sensor unit SU1 is arranged in the region first end 340a of gripper unit 340 such that it faces towards gripper elements 346, 348.

First sensor unit SU1 is adapted to detect the position of gripper unit 340 relative to tubular packaging casing supply M provided on pin 212 of first storage assembly 210 in the provision position, during moving robotic device 300 into the take-up position. First sensor unit SU1 may include a suitable sensor element, like an optical sensor or a proximity sensor. Furthermore, for detecting or verifying the orientation of gripper unit 340, first sensor unit SU1 may also include a position sensor.

In the same way, first sensor unit SU1 may also be used for detecting the position of gripper unit 340 relative to first or second filling tube 110, 130 in the refill position, for securing a correct transfer of tubular packaging casing supply M onto first or second filling tube 110; 130.

A second sensor unit SU2 may be provided, which includes a sensor element for detecting the gripping force exerted to tubular packaging casing supply M by first and second gripper elements 346, 348. Said sensor element may be a force sensor coupled to first and/or second drive assemblies 343, 344 of gripper unit 340. Second sensor unit SU2, particularly, its force sensor, may be integrated in first and/or second drive assemblies 343, 3644, or may be attached to gripper elements 346, 348.

Furthermore, at least first and second storage assemblies 210, 230 may be provided with a third sensor unit SU3 in the region of their rotation plates 214, 234. Said sensor units SU3 may detect the presence or absence of tubular packaging casing supply M on receiving pins 212, 232, and particularly on receiving pin 212, 232 that is positioned in the provision position, as well as the rotation position of first and second storage assemblies 210, 230. Thereby, it may be ensured that tubular packaging casing supply M is hold ready in the provision position, for being grasped by gripper unit 340 of robotic device 300, when in the take-up position. Third sensor unit SU3 may integrally be formed with central posts 216, 236, or receiving pins 212, 232, and may include a respective sensor element, like a weight sensor or an optical sensor. Alternatively, third sensor unit SU3 may also be provided on clipping machine CM in close vicinity to the provision position of first or second storage assembly 210, 230 when in the unloading position, whereby only one third sensor unit SU3 is necessary, and whereby the control amount is reduced and the design of the system is less complex.

It has to be noted, that in the Figs. 2 to 11, only possible positions of sensor units SU1, SU2, SU3, SU4 are shown. A specific sensor element or a detailed embodiment of said sensor units SU1, SU2, SU3, SU4 is not shown, since the respective sensors may integrally be arranged in the respective units or assemblies, like in first and second drive assemblies 343, 344, in central posts 216, 236, receiving pins 212, 232 or support element 434, and thus, sensor units SU1, SU2, SU3, SU4 are not visible.

The control operation during the production of sausage-shaped products S in system 1000 may be executed as follows:
The production of sausage-shaped products may be started by selecting a specific sausage-shaped product S to be produced, e.g. by an operator, which selects said sausage-shaped product S, the data of which together with respective control and operation parameters may be stored in control unit CM of clipping machine CM. Alternatively, these information may separately be input by the operator into control unit CU.

On first filling tube 110 being in the filling position, a tubular packaging casing supply M is stored, and which is closed at its front end by a closure clip C. Sausage-shaped products S may now be produced, as explained in conjunction with Fig. 1, by feeding filling material into tubular packaging casing M which is thereby pulled off from first filling tube 130, gathering the filled tubular packaging casing M, forming a plait-like portion thereto and placing and closing at least one closure clip C thereto, for closing the filled portion of tubular packaging casing M. At the same time, a second closure clip C may be placed and closed on the plait-like portion, for closing the front end of the sausage-shaped product S subsequently to be produced. Additionally, a suspension element L is attached to sausage-shaped product S and fixed thereto by said at least one closure clips C. Sausage-shaped product S is severed from the remaining tubular packaging casing supply M by cutting the plait-like portion between the two closure clips C.

Suspension element L is caught by catching device 540 and guided towards spindle 410 of infeed device 400, while sausage-shaped product S is discharged from clipping machine CM by discharge device DC.

Sausage-shaped product S, hanging on spindle 410 by suspension element L, is transferred along spindle 410 onto guide bar 430. A transportation element 540 of transport device 500 grasps suspension element L by its hooks 542 and guides sausage-shaped product S along guide bar 430 and rod-like element R. At a predefined position on rod-like element R, suspension element L is released from hooks 542, and sausage-shaped product S is stored on rod-like element R.

While suspension element L of sausage-shaped product S, transported by spindle 410 or transportation element 540, is passing fourth sensor unit SU4 arranged either in the region of downstream end of spindle 410 or in the region of support element 434, sensor unit SU4 detects the presence of sausage-shaped product S, e.g. in conjunction with the passage of a transportation element 540, and outputs a respective signal to control unit HCU of hanging line HL. This signal of fourth sensor unit SU4 may be used for continuing the production process. In case that no sausage-shaped product S is detected by fourth sensor unit SU4, e.g. while an empty transportation element is passing fourth sensor unit SU4, a respective signal is send to control unit HCU of hanging line HL, which in turn may act on transport device 500. Alternatively or additionally, said sensor signal may be send to control unit CU of clipping machine CM, which e.g. may stop hanging line HL.

The control operation during refilling tubular packaging casing supply M onto filling tube 130 may be executed as follows:
When starting the production of sausage-shaped products S, control unit CU of clipping machine CM initially activates robotic device 300, e.g. for starting refill of tubular packaging casing supply M onto second filling tube 130 in the refill position, in the case that second filling tube 130 is not provided with a tubular packaging casing supply M. Said activation signal may be output to robotic device 300 on the basis of a signal received from a sensor unit (not shown) that is coupled to filling tube assembly 100. Said sensor unit may output a signal corresponding to a specific position of filling tube assembly 100, like a position in which second filling tube 130 while moving towards the refill position, is in a predefined angular position relative to the refill position.

Upon receipt of said signal of the sensor unit coupled to filling tube assembly 100, robotic device 300 is activated. Robotic device 300, being in the allocation position, is moved into a position as shown in Fig. 5, in which gripper unit 340 is positioned in front of first end 132 of second filling tube 130, with gripping axis 350 of gripper unit 340 being coaxially aligned with central axis A of second filling tube 130 meanwhile being in the refill position. Sensor unit SU1 detects the position of gripper unit 340 relative to second filling tube 130. In the case that gripper unit 340 is correctly positioned in front of second filling tube 130, a signal is provided by sensor unit SU1 to control unit RCU of robotic device 300, causing robotic device 300 to shift gripper unit 340 along the central axis of second filling tube 130, such that tubular packaging casing supply M is transferred onto second filling tube 130. While shifting tubular packaging casing supply M onto second filling tube 130, first sensor unit SU1 may further detect the position of first end 340a of gripper unit 340 relative to second filling tube 130, and may stop robotic device 300 when first end 340a, and thus, the end of tubular packaging casing supply M, respectively, has reached first end 132 of second filling tube 130. Alternatively or additionally, this position may be defined in the programming of robotic device 300, which automatically stops in this position.

The signal of sensor unit SU1, indicating gripper unit 340 in the correct position on filling tube 130, may also be used to activate second casing brake assembly 140 being in the position shown in Fig. 6, to pivot towards filling tube 130, and to move second casing brake unit 142 towards first end 132 of second filling tube 130 into a position shown in Fig. 8. In this position, second casing brake unit 142 is arranged in front of first end 132 of second filling tube 130.

Subsequently, first and second drive assemblies 343, 344 of gripper unit 340 are activated to move gripper elements 346, 348 into their opened position, to release tubular packaging casing supply M onto second filling tube 130. Tubular packaging casing supply M is secured on filling tube 130 against unintentional unfolding by second casing brake unit 142. Robotic device 300 may then be moved towards the take-up position or any intermediate position between the release position and the take-up position.

Second sensor unit SU2 may confirm that tubular packaging casing supply M has been released onto second filling tube 130, e.g. since no further force is applied to tubular packaging casing supply M by gripper elements 346, 348 and/or gripper elements 346, 348 are in a predefined position, and gripper unit 340 may be removed from filling tube 130.

Thereafter, second casing brake unit 142 is shifted onto first end 132 of second filling tube 130 by retracting second telescopic casing brake holder unit 144 about a certain length, whereby the refill process is completed. A signal for activating second casing brake assembly 140 may be received from first sensor unit SU1 that detects a respective position of gripper unit 340 relative to second filling tube 130 after being removed from second filling tube 130.

Upon a respective signal indicating that tubular packaging casing supply M on first filling tube 110 arranged in the filling position is used up, filling tube assembly 100 is rotated about rotation axis 154 controlled by control unit CU of clipping machine CM, for moving second filling tube 130 with tubular packaging casing supply M stored thereon, toward the lateral position, and the filling position, respectively.

In the meantime, a receiving pin 212 of first storage assembly 210 with a tubular packaging casing supply M stored thereon, is positioned in the provision position. Third sensor unit SU3 detects the presence of tubular packaging casing supply M on said receiving pin 212, and outputs a respective signal to control unit CU of clipping machine CM, or alternatively to control unit RCU of robotic device 300. In the case that no tubular packaging casing supply M is stored on said receiving pin 212, sensor unit SU3 may cause first storage assembly 210 to rotate such that the next receiving pin 212 is moved into the provision position. These steps may be executed until a receiving pin 212 with a tubular packaging casing supply M stored thereon, is in the provision position. Alternatively, robotic device 300 may be stopped, and a respective signal may be sent to an operator. Furthermore, in the case that no receiving pin 212 of first storage assembly is provided with a tubular packaging casing supply M, rotation assembly 250 may be activated to rotate storage device 200 about rotation axis 252 and about an angle of approximately 180°, to move first storage assembly 210 from the unloading position into the loading position, in which tubular packaging casing supply M is loaded onto receiving pins 212. Thereby, second storage assembly 230 is moved from the loading position into the unloading position, in which one of its receiving pins 232 may be placed in the provision position.

When arriving at the take-up position, first sensor unit SU1 of gripper unit 340 detects receiving pin 212 in the provision position and the position of gripper unit 340 relative to said receiving pin 212. Robotic device 300 positions gripper unit 340 such that gripper elements 346, 348 are positioned laterally and parallel to receiving pin 212 with tubular packaging casing supply M thereon in the provision position. Gripping axis 350 is aligned coaxially with the central axis of receiving pin 212. Gripper elements 346, 348 are then moved towards each other into their closed position by first and second drive assemblies 343, 344, for grasping tubular packaging casing supply M stored on receiving pin 212. Second sensor unit SU2 detects the closing force exerted by gripper elements 346, 348 onto tubular packaging casing supply M. After a predetermined force value is reached, first and second drive assemblies 343, 344 are stopped. Gripper unit 340 is then moved upwardly along receiving pin 212 until gripper unit 340 is positioned with its second end 340b above the upper end of receiving pin 212. Thereafter, robotic device 300 is moved into the allocation position, from which the refill operation for refilling tubular packaging casing supply M onto first filling tube 110 now in the refill position, is executed in the same manner as described above in conjunction with second filling tube 130.

As disclosed above, the moving paths between the positions of robotic device 300 may fixedly be programmed according to selected conditions, e.g. such that robotic device 300 is moved on the shortest path and/or in the shortest time. Alternatively, or additionally, robotic device 300 may be provided with additional sensors, like proximity sensors, that may sense the surrounding area of robotic device 300, for detecting possible barriers on the moving path of robotic device 300, like parts of clipping machine CM or other peripheral machines, and for preventing collisions therewith. Further additionally, the information provided by these additional sensors may be used to optimize the moving path of robotic device 300, by an operator that varies the moving path or by self-learning of robotic device 300.

Furthermore, alternative moving paths and/or positions of robotic device 300 may be stored in control unit RCU of robotic device 300 or in control unit CU of clipping machine CM. Said alternative moving paths and/or positions of robotic device 300 may be used for controlling clipping machine CM and robotic device 300 dependent on the kind of sausage-shaped products S to be produced, e.g. with regard to a varied casing material consumption, or dependent on the kind of peripheral machines used, like alternative filling tube assemblies or storage devices. Gripper unit 340 is replaceable mounted to second end 334 of second arm 330 of robotic device 300. Thus, replacing gripper unit 340 by an alternative gripper unit, e.g. in adaption to the size of tubular packaging casing supply M, it may also be necessary to vary the positions and/or the moving path of robotic device 300.

Moreover, sensor units SU1, SU2, SU3, SU4 and any additional sensor unit may be coupled to control unit CU of clipping machine CM, for activating clipping machine CM and/or robotic device 300 and/or hanging line HL, or for deactivating clipping machine CM and/or robotic device 600 and/or hanging line HL, e.g. in case of missing tubular packaging casing supply M or possible wrong or incorrect positioning of components of system 1000. However, it is also possible that one or more of sensor units SU1, SU2, SU3, SU4 and any additional sensor unit are coupled to control unit RCU of robotic device 300 and or control unit HCU of hanging line HL, for activating or deactivating robotic device 300 and/or hanging line HL if necessary.

As explained above, robotic device 300 may be placed in the allocation position, to hold ready a tubular packaging casing supply M close to the refill position for shorten the refill time. However, dependent on the size of tubular packaging casing supply M and/or the time in which said tubular packaging casing supply M is used up, an allocation positon may be omitted, and robotic device 300 may directly be moved from the take-up position into the release position.

Furthermore, in conjunction with Figs. 2 to 10, filling tube assembly 100 has been described as including two filling tubes 110, 130. It has to be noted that the process of refilling tubular packaging casing supply onto a filling tube as disclosed above, may also be executed in a system with a filling tube assembly that includes only one filling tube, or that has more than two filling tubes, like three or four filling tubes. In such a case, only the angle of rotation for transferring a filling tube into the refill position varies, whereas the remaining steps and control operations may be executed as described above.

It is further possible that storage device 200, even if not described above, includes a control unit for controlling the basic operations of storage device 200, like the rotational movement of first and second storage assemblies 21, 230 or rotation assembly 250. However, also the control unit of storage device 200 may be coupled to control units CU, RCU of clipping machine CM or robotic device 300, for at least partially be controlled by clipping machine CM or robotic device 300, like starting or stopping storage device 200.

Moreover, filling tube assembly 100 has been described as including a feeding socket 160 via which a feeding device, like a filler, for feeding filling material, like sausage meat, may be coupled to clipping machine CM. Said feeding device may also be coupled to system 1000, particularly to control unit CU of clipping machine CM. Accordingly, system 1000 may also control the operation of said feeding device. Additionally, a further sensor unit may be provided, for monitoring the feeding device, like the flow of filling material fed to filling tubes 110, 130 of filling tube assembly 100. Said sensor unit may be coupled to system 1000, like to control unit CU of clipping machine CM, and may be arranged in the region of feeding socket 160 or at a suitable position at the feeding device. Naturally, also said feeding device may include a control unit that may be coupled to control unit CU of clipping machine CM. Thereby, also the feeding device may become part of system 1000.

Furthermore, in conjunction with Fig. 12, filling tube assembly 100 is clamped on revolver plate 150 by a C-shaped clamp 170. Additionally, filling tube assembly 100 is mounted on revolver plate 150 via a central screw 180 which is screwed through filling tube assembly 100 into revolver plate 150.

Each filling tube 110, 130 comprises a safety pin 190 on its second end 114, 134, which extends in a direction away from longitudinal axis of respective filling tube 110, 130. In a position in which a robot puts a tubular packaging casing on respective filling tube 110, 130, safety pin 190 is captured in a stopper element 192, wherein stopper element 192 preferably has a C- or L-shape.

### Reference signs

- 10: filling tube
- 12: first end of the filling tube
- 14: second end of the filling tube
- 16: casing brake assembly
- 20: clipping device
- 22: first clipping tool
- 24: second clipping tool
- 30: gathering means
- 32: first displacer unit
- 34: second displacer unit
- 40: cutting device
- 50: discharge device
- 100: filling tube assembly
- 110: first filling tube
- 112: first end of first filling tube
- 114: second end of first filling tube
- 120: first casing brake assembly
- 122: first casing brake unit
- 124: first telescopic casing brake holder unit
- 125: telescopic guidance
- 126: telescopic drive
- 128: pivot drive unit
- 130: second filling tube
- 132: first end of second filling tube
- 134: second end of second filling tube
- 136: framework
- 138: joint portion
- 140: second casing brake assembly
- 142: second casing brake unit
- 145: telescopic guidance
- 144: second telescopic casing brake holder unit
- 146: telescopic drive

- 148: pivot drive unit
- 150: revolver plate
- 152: drive device
- 154: rotation axis
- 160: feeding socket
- 170: clamp
- 180: central screw
- 190: safety pin
- 192: stopper element
- 200: storage device
- 210: first storage assembly
- 212: receiving pins
- 214: rotation plate
- 216: central post
- 218: retaining elements
- 230: second storage assembly
- 220: rotation axis
- 222: rotary drive
- 232: receiving pins
- 234: rotation plate
- 236: central post
- 238: retaining elements
- 240: rotation axis
- 242: rotary drive
- 250: rotation assembly
- 252: rotation axis
- 254: rotation table
- 300: robotic device
- 310: base
- 320: first arm
- 322: first end of first arm
- 324: second end of first arm
- 330: second arm
- 332: first end of second arm

- 334: second end of second arm
- 340: gripper unit
- 340a: first end of the gripper unit
- 340b: second end of the gripper unit
- 342: base plate
- 342a: first end of the base plate
- 342b: second end of the base plate
- 343: first drive assembly
- 344: second drive assembly
- 345: connecting unit
- 346: first gripper element
- 346a, 346b: brackets
- 348: second gripper element
- 348a, 348b: brackets
- 350: gripping axis
- 400: infeed device
- 410: spindle
- 412: toothed surface
- 420: spindle bearing
- 422: support roller
- 424: toothed portion
- 430: guide bar
- 432: grooves
- 434: support element
- 436: engaging holes
- 440: connecting element
- 442: grooves
- 450: catching needle
- 452: first end
- 454: second end
- 456: central portion
- 500: transport device
- 510: conveyor chains
- 520: deflection rollers

- 530: common axle
- 540: transportation element
- 542: hooks
- 1000: system for producing sausage-shaped products
- A: central axis of filling tubes
- C: closure clip
- CD: clipping device
- CM: clipping machine
- CU: control unit of the clipping machine
- DC: discharge device
- F: feeding direction
- GM: gathering means
- HL: hanging line
- HCU: control unit of the hanging line
- ID: infeed direction
- L: suspension element
- M: tubular packaging casing / tubular packaging casing supply
- P: plait-like portion
- RCU: control unit of the robotic device
- S: sausage-shaped product
- SC: supply of closure clips
- SU1: first sensor unit
- SU2: second sensor unit
- SU3: third sensor unit
- SU4: fourth sensor unit
- T: transportation direction

## Claims

1. A filling tube assembly (100) of a clipping machine (CM) for producing sausage-shaped products, like sausages, by filling a filling material into a tubular packaging casing, the filling tube assembly (100) comprising:
a revolver plate (150), which is rotatable about a rotation axis (154),
at least a first filling tube (110) and a second filling tube (130) each having a central axis (A), wherein the filling tubes (110, 130) are mounted on the revolver plate (150),
at least a first casing brake assembly (120) and a second casing brake assembly (140), wherein the first casing brake assembly (120) is connected to the first filling tube (110) and the second casing brake assembly (140) is connected to the second filling tube (130), and
a drive device (152) for rotating the revolver plate (150) including the filling tubes (110, 130) about the rotation axis (154),
wherein the central axis (A) of the first filling tube (110) and the central axis (A) of the second filling tube (130) define an angle larger than 0°, preferably between 15° and 75°, and more preferably between 30° and 60°,
wherein the first casing brake assembly (120) is associated with the first filling tube (110) and includes a first casing brake unit (122) positioned in the region of a first end (112) of the first filling tube (110), and is pivotally coupled to the revolver plate (150) by a first telescopic casing brake holder unit (124), and
wherein the second casing brake assembly (140) is associated with the second filling tube (130) and includes a second casing brake unit (142) positioned in the region of a first end (132) of the second filling tube (130), and is pivotally coupled to the revolver plate (150) by a second telescopic casing brake holder unit (144),
wherein the first casing brake unit (122) is pivoted away from the first end (112) of the first filling tube (110), and
wherein the second casing brake unit (142) is pivoted away from the first end (132) of the second filling tube (130),
**characterized in that** the first casing brake unit is linearly reversibly shiftable along the first filling tube onto its first end, and **in that** the second casing brake unit is linearly reversibly shiftable along the second filling tube onto its first end.

2. The filling tube assembly (100) according to claim 1, wherein the first casing brake holder unit (124) includes a telescopic guidance (125) and a telescopic drive (126) for extending and retracting telescopic guidance (125), and
wherein the second casing brake holder unit (144) includes a telescopic guidance (145) and a telescopic drive (146) for extending and retracting telescopic guidance (145).

3. The filling tube assembly (100) according to claim 2, wherein the telescopic drives (126, 146) are linear drives, particularly, piston/cylinder drives.

4. The filling tube assembly (100) according to any of claims 1 to 3, wherein the filling tube assembly (100) further comprises a first pivot drive unit (128), which is provided for pivoting the first casing brake assembly (120) relative to the first filling tube (110) about a pivot point (129) at which the first casing brake assembly (120) is coupled to the revolver plate (150), and
wherein the filling tube assembly (100) further comprises a second pivot drive unit (148), which is provided for pivoting the second casing brake assembly (140) relative to the second filling tube (130) about a pivot point (149) at which the second casing brake assembly (140) is coupled to the revolver plate (150).

5. The filling tube assembly (100) according to any of claims 1 to 4, wherein the filling tube assembly (100) is mounted on a framework (136) via a joint portion (138).

6. The filling tube assembly (100) according to claim 5, wherein the joint portion (138) is mounted on a side wall of the framework (136).

7. The filling tube assembly (100) according to claim 5 or 6, wherein the filling tube assembly (100) is linearly and/or rotatably shiftable such that the filling tube (110; 130) is positioned in front of the clipping machine (CM).

8. The filling tube assembly (100) according to any of claims 5 to 7, wherein a feeding socket (160) is fixed to the revolver plate (150) and facing away from the clipping machine (CM), wherein feeding socket (160) is coaxially aligned with the central axis (A) of the filling tube (110; 130).

9. A system (1000) for producing sausage-shaped products (S), like sausages, by filling a filling material into a tubular packaging casing (M), the system (1000) includes a clipping machine (CM) for producing sausage-shaped products (S), a robotic device (300) for transferring a tubular packaging casing supply (M) to the clipping machine (CM), and a storage device (200) for storing a tubular packaging casing supply (M) and for providing the tubular packaging casing supply (M) to the robotic device (300),
the clipping machine (CM) comprises:
- a filling tube assembly (100) according to any of claims 1 to 8,
- gathering means for gathering the filled tubular packaging casing (M) and for forming a plait-like portion (P) thereto, the gathering means including a first displacer unit and a second displacer unit,
- a clipping device having a first and a second closing tool being reversibly movable between an opened position and a closed position, for applying at least one closure means (C) to the plait-like portion (P) and closing said closure means (C) when the closing tools are in their closed position,
- a discharge device (DC) for discharging the sausage-shaped product (S) just produced out of the clipping machine (CM), and
- a control unit (CU) for controlling at least the clipping machine (CM) and the robotic device (300).

10. The system (1000) according to claim 9, wherein the robotic device (300) includes:
- a gripper unit (340) for gripping a tubular packaging casing supply (M) provided by the storage device (200), and for transferring said tubular packaging casing supply (M) onto the at least first filling tube (110) of the clipping machine (CM); and
- a control unit (RCU) for controlling at least the gripper unit (340).

11. The system (1000) according to claim 9 or 10, wherein the storage device (200) includes:
- at least a first storage assembly (210) in which at least one tubular packaging casing supply (M) is provided for being transferred by the robotic device (300) onto the at least first filling tube (110) of the clipping machine (CM).

12. The system (1000) according to any of claims 9 to 11, wherein the first filling tube (110) is movable between a filling position, in which filling material is fed through the first filling tube (110) into the tubular packaging casing (M) stored on the first filling tube (110), and a refill position, in which a tubular packaging casing supply (M) is transferred onto the first filling tube (110).

13. The system (1000) according to any of claims 9 to 12, further including a feeding device coupled to clipping machine (CM) via a feeding socket (160) of the filling tube assembly (100), for feeding filling material to the clipping machine (CM).

14. The system (1000) according to claim 13, wherein a sensor unit is provided for monitoring the feeding device.

15. A method for producing sausage-shaped products (S) in a system (1000) according to any of claims 9 to 12, the method comprises the steps of:
- feeding a filling material through the at least first filling tube (110; 130) of the clipping machine (CM) into a tubular packaging casing (M) stored on the at least first filling tube (110; 130),
- gathering the filled tubular packaging casing (M) by the gathering means of the clipping machine (CM) and forming a plait-like portion (P) thereto,
- applying at least one closure means (C) to the plait-like portion (P) and closing said closure means (C) by the clipping device of the clipping machine (CM),
- discharging the sausage-shaped product (S) just produced out of the clipping machine (CM) by the discharge device (DC) of the clipping machine (CM),
the method further comprises the steps of:
- moving the at least first filling tube (110; 130) from the filling position, in which filling material is fed into the tubular packaging casing (M), into the refill position, in which a tubular packaging casing supply (M) is transferred onto the at least first filling tube (110; 130), and
- transferring by the robotic device (300) a tubular packaging casing supply (M) provided by a storage device (200) onto the at least first filling tube (110; 130) being arranged in the refill position.

## Patentansprüche

1. Füllrohr-Anordnung (100) einer Clipmaschine (CM) zur Herstellung wurstförmiger Produkte, wie Würste, durch Einfüllen eines Füllguts in eine schlauchförmige Verpackungshülle, wobei die Füllrohr-Anordnung (100) umfasst:
eine um eine Drehachse (154) drehbare Revolverplatte (150),
wenigstens ein erstes Füllrohr (110) und ein zweites Füllrohr (130), die jeweils eine Mittelachse (A) aufweisen, wobei die Füllrohre (110, 130) an der Revolverplatte (150) montiert sind,
wenigstens eine erste Darmbremsenanordnung (120) und eine zweite Darmbremsenanordnung (140), wobei die erste Darmbremsenanordnung (120) mit dem ersten Füllrohr (110) verbunden ist und die zweite Darmbremsenanordnung (140) mit dem zweiten Füllrohr (130) verbunden ist, und
eine Antriebsvorrichtung (152) zum Drehen der Revolverplatte (150) einschließlich der Füllrohre (110, 130) um die Drehachse (154),
wobei die Mittelachse (A) des ersten Füllrohrs (110) und die Mittelachse (A) des zweiten Füllrohrs (130) einen Winkel größer als 0°, vorzugsweise zwischen 15° und 75° und noch mehr bevorzugt zwischen 30° und 60° definieren,
wobei die erste Darmbremsenanordnung (120) dem ersten Füllrohr (110) zugeordnet ist und eine erste Darmbremseinheit (122) aufweist, die im Bereich eines ersten Endes (112) des ersten Füllrohrs (110) angeordnet ist, und über eine erste ausziehbare Darmbremsenhaltereinheit (124) schwenkbar mit der Revolverplatte (150) gekoppelt ist, und
wobei die zweite Darmbremsenanordnung (140) dem zweiten Füllrohr (130) zugeordnet ist und eine zweite Darmbremseinheit (142) aufweist, die im Bereich eines ersten Endes (132) des zweiten Füllrohrs (130) angeordnet ist, und über eine zweite ausziehbare Darmbremsenhaltereinheit (144) schwenkbar mit der Revolverplatte (150) gekoppelt ist,
wobei die erste Darmbremseneinheit (122) vom ersten Ende (112) des ersten Füllrohrs (110) weg schwenkbar ist, und
wobei die zweite Darmbremseneinheit (142) vom ersten Ende (132) des zweiten Füllrohrs (130) weg schwenkbar ist,
**dadurch gekennzeichnet, dass** die erste Darmbremseneinheit entlang des ersten Füllrohrs auf dessen erstes Ende linear reversibel verschiebbar ist, und dass die zweite Darmbremseneinheit entlang des zweiten Füllrohrs auf dessen erstes Ende linear reversibel verschiebbar ist.

2. Füllrohr-Anordnung (100) nach Anspruch 1, wobei die erste Darmbremsenhaltereinheit (124) eine ausziehbare Führung (125) und einen Teleskopantrieb (126) zum Ausziehen und Zurückziehen der ausziehbaren Führung (125) aufweist, und
wobei die zweite Darmbremsenhaltereinheit (144) eine ausziehbare Führung (145) und einen Teleskopantrieb (146) zum Ausziehen und Zurückziehen der ausziehbaren Führung (145) umfasst.

3. Füllrohr-Anordnung (100) nach Anspruch 2, wobei die Teleskopantriebe (126, 146) Linearantriebe, insbesondere Kolben-/Zylinderantriebe sind.

4. Füllrohr-Anordnung (100) nach einem der Ansprüche 1 bis 3, wobei die Füllrohr-Anordnung (100) ferner eine erste Schwenkantriebseinheit (128) umfasst, die zum Schwenken der ersten Darmbremsenanordnung (120) relativ zum ersten Füllrohr (110) um einen Schwenkpunkt (129), an dem die erste Darmbremsenanordnung (120) mit der Revolverplatte (150) gekoppelt ist, vorgesehen ist, und
wobei die Füllrohr-Anordnung (100) ferner eine zweite Schwenkantriebseinheit (148) umfasst, die zum Schwenken der zweiten Darmbremsenanordnung (140) relativ zum zweiten Füllrohr (130) um einen Schwenkpunkt (149), an dem die zweite Darmbremsenanordnung (140) mit der Revolverplatte (150) gekoppelt ist, vorgesehen ist.

5. Füllrohr-Anordnung (100) nach einem der Ansprüche 1 bis 4, wobei die Füllrohr-Anordnung (100) über einen Verbindungsabschnitt (138) an einem Rahmen (136) montiert ist.

6. Füllrohr-Anordnung (100) nach Anspruch 5, wobei der Verbindungsabschnitt (138) an einer Seitenwand des Rahmens (136) montiert ist.

7. Füllrohr-Anordnung (100) nach Anspruch 5 oder 6, wobei die Füllrohr-Anordnung (100) linear und/oder drehbar verschiebbar ist, so dass das Füllrohr (110; 130) vor der Clipmaschine (CM) positioniert ist.

8. Füllrohr-Anordnung (100) nach einem der Ansprüche 5 bis 7, wobei eine Zuführbuchse (160) an der Revolverplatte (150) befestigt ist und von der Clipmaschine (CM) weg zeigt, wobei die Zuführbuchse (160) koaxial zur Mittelachse (A) des Füllrohrs (110; 130) ausgerichtet ist.

9. System (1000) zur Herstellung von wurstförmigen Produkten (S), wie Würsten, durch Einfüllen eines Füllguts in eine schlauchförmige Verpackungshülle (M), wobei das System (1000) eine Clipmaschine (CM) zur Herstellung von wurstförmigen Produkten (S), eine Robotervorrichtung (300) zum Übergeben eines Schlauchverpackungshüllenvorrats (M) an die Clipmaschine (CM), und eine Lagervorrichtung (200) zum Lagern eines Schlauchverpackungshüllenvorrats (M) und zum Zuführen des Schlauchverpackungshüllenvorrats (M) zur Robotervorrichtung (300) aufweist,
wobei die Clipmaschine (CM) umfasst:
- eine Füllrohr-Anordnung (100) nach einem der Ansprüche 1 bis 8,
- Raffungsmittel zum Raffen der gefüllten schlauchförmigen Verpackungshülle (M) und zum Formen eines zopfartigen Abschnitts (P) daran, wobei die Raffungsmittel eine erste Verdrängereinheit und eine zweite Verdrängereinheit aufweisen,
- eine Clipvorrichtung, die ein erstes und ein zweites Schließwerkzeug aufweist, die zwischen einer offenen Stellung und einer geschlossenen Stellung reversibel bewegbar sind, um wenigstens ein Verschlussmittel (C) an dem zopfartigen Abschnitt (P) anzubringen und das Verschlussmittel (C) zu schließen, wenn sich die Schließwerkzeuge in ihrer geschlossenen Stellung befinden,
- eine Austragsvorrichtung (DC) zum Austragen des gerade hergestellten wurstförmigen Produkts (S) aus der Clipmaschine (CM), und
- eine Steuereinheit (CU) zum Steuern wenigstens der Clipmaschine (CM) und der Robotervorrichtung (300).

10. System (1000) nach Anspruch 9, wobei die Robotervorrichtung (300) aufweist:
- eine Greifereinheit (340) zum Greifen eines von der Lagervorrichtung (200) bereitgestellten Schlauchverpackungshüllenvorrats (M) und zum Überführen des Schlauchverpackungshüllenvorrats (M) auf das wenigstens erste Füllrohr (110) der Clipmaschine (CM); und
- eine Steuereinheit (RCU) zum Steuern wenigstens der Greifereinheit (340).

11. System (1000) nach Anspruch 9 oder 10, wobei die Lagervorrichtung (200) aufweist:
- wenigstens eine erste Lageranordnung (210), in der wenigstens ein Schlauchverpackungshüllenvorrat (M) bereitgestellt ist, um von der Robotervorrichtung (300) auf das wenigstens erste Füllrohr (110) der Clipmaschine (CM) überführt zu werden.

12. System (1000) nach einem der Ansprüche 9 bis 11, wobei das erste Füllrohr (110) zwischen einer Füllposition, in der Füllgut durch das erste Füllrohr (110) in die auf dem ersten Füllrohr (110) gelagerte schlauchförmige Verpackungshülle (M) gefördert wird, und eine Nachladeposition, in der ein Schlauchverpackungshüllenvorrat (M) auf das erste Füllrohr (110) überführt wird, bewegbar ist.

13. System (1000) nach einem der Ansprüche 9 bis 12, ferner eine Zuführvorrichtung aufweisend, die über eine Zuführbuchse (160) der Füllrohr-Anordnung (100) mit der Clipmaschine (CM) gekoppelt ist, um Füllgut der Clipmaschine (CM) zuzuführen.

14. System (1000) nach Anspruch 13, wobei eine Sensoreinheit zum Überwachen der Zuführvorrichtung vorgesehen ist.

15. Verfahren zur Herstellung von wurstförmigen Produkten (S) in einem System (1000) nach einem der Ansprüche 9 bis 12, wobei das Verfahren die Schritte umfasst:
- Zuführen eines Füllguts durch das wenigstens erste Füllrohr (110; 130) der Clipmaschine (CM) in eine auf dem wenigstens ersten Füllrohr (110; 130) gelagerte schlauchförmige Verpackungshülle (M),
- Raffen der gefüllten schlauchförmigen Verpackungshülle (M) durch die Raffungsmittel der Clipmaschine (CM) und Formen eines zopfartigen Abschnitts (P) daran,
- Anbringen wenigstens eines Verschlussmittels (C) an dem zopfartigen Abschnitt (P) und Verschließen des Verschlussmittels (C) durch die Clipvorrichtung der Clipmaschine (CM),
- Austragen des gerade hergestellten wurstförmigen Produkts (S) aus der Clipmaschine (CM) durch die Austragsvorrichtung (DC) der Clipmaschine (CM),
wobei das Verfahren ferner die Schritte umfasst:
- Bewegen des wenigstens ersten Füllrohrs (110; 130) aus der Füllposition, in der Füllgut in die schlauchförmige Verpackungshülle (M) zugeführt wird, in die Nachladeposition, in der ein Schlauchverpackungshüllenvorrat (M) auf das wenigstens erste Füllrohr (110; 130) überführt wird, und
- Überführen eines von einer Lagervorrichtung (200) bereitgestellten Schlauchverpackungshüllenvorrats (M) durch die Robotervorrichtung (300) auf das wenigstens erste Füllrohr (110; 130), das in der Nachladeposition angeordnet ist.

## Revendications

1. Ensemble (100) tube de remplissage d'une machine d'agrafage (CM) destiné à produire des produits en forme de saucisse, comme des saucisses, par remplissage d'un matériau de remplissage dans une enveloppe d'emballage tubulaire, l'ensemble (100) tube de remplissage comprenant :
une plaque revolver (150), qui peut tourner autour d'un axe de rotation (154),
au moins un premier tube de remplissage (110) et un second tube de remplissage (130) présentant chacun un axe central (A), les tubes de remplissage (110, 130) étant montés sur la plaque revolver (150),
au moins un premier ensemble frein (120) d'enveloppe et un second ensemble frein (140) d'enveloppe, le premier ensemble frein (120) d'enveloppe étant relié au premier tube de remplissage (110) et le second ensemble frein (140) d'enveloppe étant relié au second tube de remplissage (130) et
un dispositif d'entraînement (152) destiné à faire tourner la plaque revolver (150) incluant les tubes de remplissage (110, 130) autour de l'axe de rotation (154),
l'axe central (A) du premier tube de remplissage (110) et l'axe central (A) du second tube de remplissage (130) définissant un angle supérieur à 0°, de préférence situé entre 15° et 75° et plus préférablement situé entre 30° et 60°,
le premier ensemble frein (120) d'enveloppe étant associé au premier tube de remplissage (110) et incluant une première unité de frein (122) d'enveloppe positionnée dans la région d'une première extrémité (112) du premier tube de remplissage (110) et étant accouplée de façon pivotante à la plaque revolver (150) par une première unité télescopique support (124) de frein d'enveloppe, et
le second ensemble frein (140) d'enveloppe étant associé au second tube de remplissage (130) et incluant une seconde unité de frein (142) d'enveloppe positionnée dans la région d'une première extrémité (132) du second tube de remplissage (130) et étant accouplée de façon pivotante à la plaque revolver (150) par une seconde unité télescopique support (144) de frein d'enveloppe,
la première unité de frein (122) d'enveloppe étant pivotée à l'opposé de la première extrémité (112) du premier tube de remplissage (110) et
la seconde unité de frein (142) d'enveloppe étant pivotée à l'opposé de la première extrémité (132) du second tube de remplissage (130),
**caractérisé en ce que** la première unité de frein d'enveloppe peut être décalée linéairement de manière réversible le long du premier tube de remplissage sur sa première extrémité et **en ce que** la seconde unité de frein d'enveloppe peut être décalée linéairement de manière réversible le long du second tube de remplissage sur sa première extrémité.

2. Ensemble (100) tube de remplissage selon la revendication 1, la première unité support (124) de frein d'enveloppe incluant un guidage télescopique (125) et un entraînement télescopique (126) destiné à étendre et à rétracter le guidage télescopique (125) et
la seconde unité support (144) de frein d'enveloppe incluant un guidage télescopique (145) et un entraînement télescopique (146) destiné à étendre et à rétracter le guidage télescopique (145).

3. Ensemble (100) tube de remplissage selon la revendication 2, les entraînements télescopiques (126, 146) étant des entraînements linéaires, en particulier des entraînements à piston/cylindre.

4. Ensemble (100) tube de remplissage selon l'une quelconque des revendications 1 à 3, l'ensemble (100) tube de remplissage comprenant en outre une première unité d'entraînement en pivotement (128), qui est prévue pour faire pivoter le premier ensemble frein (120) d'enveloppe par rapport au premier tube de remplissage (110) autour d'un point de pivotement (129) au niveau duquel le premier ensemble frein (120) d'enveloppe est accouplé à la plaque revolver (150) et
l'ensemble (100) tube de remplissage comprenant en outre une seconde unité d'entraînement en pivotement (148), qui est prévue pour faire pivoter le second ensemble frein (140) d'enveloppe par rapport au second tube de remplissage (130) autour d'un point de pivotement (149) au niveau duquel le second ensemble frein (140) d'enveloppe est accouplé à la plaque revolver (150).

5. Ensemble (100) tube de remplissage selon l'une quelconque des revendications 1 à 4, l'ensemble (100) tube de remplissage étant monté sur un cadre (136) par l'intermédiaire d'une partie d'articulation (138).

6. Ensemble (100) tube de remplissage selon la revendication 5, la partie d'articulation (138) étant montée sur une paroi latérale du cadre (136).

7. Ensemble (100) tube de remplissage selon la revendication 5 ou 6, l'ensemble (100) tube de remplissage pouvant être décalé linéairement et/ou en rotation de telle sorte que le tube de remplissage (110 ; 130) est positionné devant la machine d'agrafage (CM).

8. Ensemble (100) tube de remplissage selon l'une quelconque des revendications 5 à 7, une douille d'alimentation (160) étant fixée à la plaque revolver (150) et opposée à la machine d'agrafage (CM), la douille d'alimentation (160) étant alignée coaxialement avec l'axe central (A) du tube de remplissage (110 ; 130).

9. Système (1000) de production de produits en forme de saucisse (S), comme des saucisses, par remplissage d'un matériau de remplissage dans une enveloppe d'emballage tubulaire (M), le système (1000) incluant une machine d'agrafage (CM) destinée à produire des produits en forme de saucisse (S), un dispositif robotique (300) destiné à transférer une alimentation d'enveloppe d'emballage tubulaire (M) à la machine d'agrafage (CM) et un dispositif de stockage (200) destiné à stocker une alimentation d'enveloppe d'emballage tubulaire (M) et à fournir l'alimentation d'enveloppe d'emballage tubulaire (M) au dispositif robotique (300),
la machine d'agrafage (CM) comprenant :
- un ensemble (100) tube de remplissage selon l'une quelconque des revendications 1 à 8,
- des moyens de collecte destinés à collecter l'enveloppe d'emballage tubulaire (M) remplie et à former une partie en forme de pli (P) sur celle-ci, les moyens de collecte incluant une première unité de déplacement et une seconde unité de déplacement,
- un dispositif d'agrafage présentant un premier et un second outil de fermeture mobiles de manière réversible entre une position ouverte et une position fermée, destiné à appliquer au moins un moyen de fermeture (C) sur la partie en forme de pli (P) et à fermer ledit moyen de fermeture (C) lorsque les outils de fermeture sont dans leur position fermée,
- un dispositif d'évacuation (DC) destiné à évacuer le produit en forme de saucisse (S) qui vient d'être produit hors de la machine d'agrafage (CM) et
- une unité de commande (CU) destinée à commander au moins la machine d'agrafage (CM) et le dispositif robotique (300).

10. Système (1000) selon la revendication 9, le dispositif robotique (300) incluant :
- une unité de préhension (340) destinée à saisir une alimentation d'enveloppe d'emballage tubulaire (M) fournie par le dispositif de stockage (200) et à transférer ladite alimentation d'enveloppe d'emballage tubulaire (M) sur ledit au moins un premier tube de remplissage (110) de la machine d'agrafage (CM) ; et
- une unité de commande (RCU) destinée à commander au moins l'unité de préhension (340).

11. Système (1000) selon la revendication 9 ou 10, le dispositif de stockage (200) incluant :
- au moins un premier ensemble de stockage (210) dans lequel au moins une alimentation d'enveloppe d'emballage tubulaire (M) est prévue pour être transférée par le dispositif robotique (300) sur ledit au moins un premier tube de remplissage (110) de la machine d'agrafage (CM).

12. Système (1000) selon l'une quelconque des revendications 9 à 11, le premier tube de remplissage (110) étant mobile entre une position de remplissage, dans laquelle un matériau de remplissage est introduit à travers le premier tube de remplissage (110) dans l'enveloppe d'emballage tubulaire (M) stockée sur le premier tube de remplissage (110), et une position de recharge, dans laquelle une alimentation d'enveloppe d'emballage tubulaire (M) est transférée sur le premier tube de remplissage (110).

13. Système (1000) selon l'une quelconque des revendications 9 à 12, incluant en outre un dispositif d'alimentation accouplé à la machine d'agrafage (CM) par l'intermédiaire d'une douille d'alimentation (160) de l'ensemble (100) tube de remplissage, destiné à alimenter la machine d'agrafage (CM) en matériau de remplissage.

14. Système (1000) selon la revendication 13, une unité de capteur étant prévue pour surveiller le dispositif d'alimentation.

15. Procédé de production de produits en forme de saucisse (S) dans un système (1000) selon l'une quelconque des revendications 9 à 12, le procédé comprenant les étapes de :
- alimentation d'un matériau de remplissage à travers ledit au moins un premier tube de remplissage (110 ; 130) de la machine d'agrafage (CM) dans une enveloppe d'emballage tubulaire (M) stockée sur ledit au moins un premier tube de remplissage (110 ; 130),
- collecte de l'enveloppe d'emballage tubulaire (M) remplie par les moyens de collecte de la machine d'agrafage (CM) et formation d'une partie en forme de pli (P) sur celle-ci,
- application d'au moins un moyen de fermeture (C) sur la partie en forme de pli (P) et fermeture dudit moyen de fermeture (C) par le dispositif d'agrafage de la machine d'agrafage (CM),
- évacuation du produit en forme de saucisse (S) qui vient d'être produit hors de la machine d'agrafage (CM) par le dispositif d'évacuation (DC) de la machine d'agrafage (CM),
le procédé comprenant en outre les étapes de :
- déplacement dudit au moins un premier tube de remplissage (110 ; 130) à partir de la position de remplissage, dans laquelle un matériau de remplissage est introduit dans l'enveloppe d'emballage tubulaire (M), dans la position de recharge, dans laquelle une alimentation d'enveloppe d'emballage tubulaire (M) est transférée sur ledit au moins un premier tube de remplissage (110 ; 130) et
- transfert, par le dispositif robotique (300), d'une alimentation d'enveloppe d'emballage tubulaire (M) fournie par un dispositif de stockage (200) sur ledit au moins un premier tube de remplissage (110 ; 130) agencé dans la position de recharge.
